# EUROPEAN PATENT APPLICATION

(11) **EP 4 742 634 A1**
(43) Date of publication of application: **13.05.2026**
(21) Application number: 23944051.4
(22) Date of filing: 05.07.2023
(51) Int. Cl.: H04L 67/141

(54) **CROSS-PLATFORM CLOUD OPERATING SYSTEM AND METHOD THEREOF**

(71) Applicant: Yang, Liqun, Zhuhai, Guangdong 519000 (CN)
(72) Inventor: Yang, Liqun, Zhuhai, Guangdong 519000 (CN)
(74) Representative: Isern Patentes y Marcas S.L.
(86) International application number: PCT/CN2023/105975
(87) International publication number: WO 2025/007320

(57) **Abstract**

A cloud operating system is configured in a remote computing device that is connected to a local terminal via a network. The local terminal serves as both a user operation terminal and a user application graphics interface receiving terminal. The cloud operating system includes: a base kernel for invoking physical and/or virtualized hardware resources of the remote computing device in response to a request; a runtime library for providing a runtime environment for at least one operating system platform based on the base kernel; an interface service module for providing at least one application programming interface corresponding to the runtime library; and an application service module for providing application interfaces and service integration to the local terminal.

## Description

### TECHNICAL FIELD

The present invention relates to a cloud computing operating system and methods therefor, belong to the field of software and communication technology.

### BACKGROUND

Smart terminals, such as smartphones, automotive infotainment devices, smart wearable devices, smart home appliances, etc., have become indispensable network service terminals in people's daily lives. The operating systems of these smart devices not only vary in type but also exhibit significant version differences and severe fragmentation. This necessitates accommodating the requirements and conventions of diverse operating system platforms across various types and versions when developing, installing, upgrading, and using user applications, causing increasing difficulties for both developers and users. In addition, the hardware configurations and replacement cycles of various smart devices vary significantly, making it difficult to synchronously enhance the user experience. For example, due to the increasingly bulky APP, it is necessary to replace the entire smartphone more frequently to acquire more local storage capacity, but the upgrade of other hardware on the phone leads to excessive performance, resulting in waste. For another instance, due to the low replacement frequency of the automotive infotainment device or the smart home appliance, the upgrade frequency and experience of APP that require human-machine interaction (HMI) running therein is also far below similar APP in the smartphones.

Therefore, there is a need for a cross-platform and web-based operating system that can be compatible with various smart terminals, providing a unified user APP ecosystem with rich user experiences and simplified program development. Additionally, thanks to the continuous development of new-generation mobile communication technologies and the comprehensive coverage of network base station facilities, data interconnection between smart terminals and external servers has become faster, lower-latency, and more stable, providing the technical foundation and operational guarantees for web-based operating systems.

### SUMMARY

The present invention provides a cross-platform cloud operating system and related methods, browsers, storage medium, terminals, servers, and the like, to address at least one of the technical problem existing in the prior art.

According to an aspect of the invention, a cloud operating system is configured in a remote computing device but not deployed on a local terminal. The remote computing device is connected to the local terminal via a network, with the local terminal serving as the user operation terminal. The cloud operating system includes: a base kernel for invoking physical and/or virtualized hardware resources of the remote computing device in response to a request; a runtime library for providing a runtime environment for at least one operating system platform based on the base kernel; an interface service module for providing at least one application programming interface corresponding to the runtime library; and an application service module for providing application interfaces and service integration to the local terminal.

According to another aspect, the present invention relates to a method for generating a remote graphics interface based on the cloud operating system. The method for generating a remote graphics interface includes the following steps of: establishing a network connection between a remote computing device and a local terminal, and serving the local terminal as an operation terminal of a user; acquiring user account information and hardware configuration parameters from the local terminal, the hardware configuration parameters including at least one of a local operating system type, a screen size, a display resolution and an input device type; retrieving a graphics interface style and operational habits corresponding to a user account or local operating system type from the user database in the remote computing device; generating a browser window within the browser framework of the remote computing device based on the acquired screen size or resolution of the local terminal; configuring a renderer to generate a graphics interface layout based on the graphics interface style; determining operational gestures for the browser window based on the operational habits, thereby establishing a graphics interface environment for a user application running within the browser framework; and capturing a graphics interface image of the browser window and transmitting the graphics interface image to the local terminal for display.

According to another aspect, the present invention relates to a method for transmitting graphics interface image based on the cloud operating system. The method for transmitting graphics interface image includes the following steps of: establishing an operation data interaction connection between the local terminal and the remote computing device, wherein a change to at least a portion of the graphics interface of the remote computing device is caused by the operation data transmitted from the local terminal; transmitting graphics interface images from the remote computing device to the local terminal for at least a time period; dynamically adjusting a graphics interface image to be transmitted from the remote computing device based on a transmission interval of the transmitted graphics interface images from the remote computing device to the local terminal. The dynamically adjusting includes: determining, within a predetermined time period, the interval between image transmissions is less than an interval threshold, and performing, in a subsequent time period, at least one step of: reducing the number of the graphics interface images transmitted to the local terminal; and reducing the quality of the entire or a portion of the graphics interface image through image compression.

According to another aspect, the present invention relates to a remote browser operating on the cloud operating system. The remote browser includes: a client unit for communicating between the remote browser application and other applications running on the cloud operating system, and for communicating with the local terminal to acquire data from the local terminal and the remote computing device; and a graphics interface image acquisition unit for acquiring at least a portion of the graphics interface image from the user graphics interface of a web-based user application running within the remote browser, wherein the client unit and the graphics interface image acquisition unit are respectively connected to an image interaction service program in the cloud operating system, and wherein the image interaction service program implements the method for generating a remote graphics interface.

According to another aspect, the present invention relates to a local browser operating on the local operating system. The local browser includes: a client unit for communicating between the local browser application and other applications running on the local operating system, and for communicating with the remote computing device to acquire data from the local terminal and the remote computing device; a display component for displaying graphics interface images from the remote computing device; and an image interaction service unit connected to the display component for implementing the method for transmitting graphics interface image.

According to another aspect, the present invention relates to a data transmission method for the cloud operating system deployed in the remote computing device, wherein via a network the remote computing device is associated with a local terminal serving as both a user operation terminal and a graphics interface display terminal for the cloud operating system, wherein the local terminal and the remote computing device each is provided with one or more client units, and the remote computing device is provided with a proxy unit running resident in the background. The data transmission method includes the following steps of: publishing, by the client unit provided in the local terminal or remote computing device, one or more data message packets via the proxy unit through a subscription protocol transmission channel; allowing one or more other client units provided in the local terminal or remote computing device that subscribe to the data message packets in advance to pull the corresponding data message packets; and determining consumption of all the data message packets.

According to another aspect of the present invention, a data redirection method based on the cloud operating system includes the following steps of: establishing communication between the local terminal and the remote computing device optionally based on a persistent connection network protocol, acquiring a first communication interface address for connecting the local terminal, and sending an identifier of the local terminal to the remote computing device; establishing communication between the remote computing device and a third-party server with the local terminal identifier, and acquiring a second communication interface address for connecting the third-party server; and modifying the first communication interface address and second communication interface address to be the same, and redirecting at least a portion of the data transmission between the remote computing device and the third-party server to become the data transmission between the local terminal and the third-party server.

According to another aspect, the present invention relates to a data redirection method based on the above cloud operating system, wherein the first local terminal and the second local terminal respectively serve as the operation terminals for at least one user of the first remote computing device and the second remote computing device. The data redirection method includes the following steps: based on the communication connection established between the first remote computing device and the second remote computing device, determining an event where the first local terminal initiates a direct communication connection to the second local terminal; acquiring the first communication interface address connected to the first local terminal from the data connection between the first local terminal and the first remote computing device; acquiring the second communication interface address connected to the second local terminal from the data connection between the second local terminal and the second remote computing device; modifying the first communication interface address and the second communication interface address to be consistent, thereby redirecting at least a portion of the data transmission between the first remote computing device and the second remote computing device to become data transmission between the first local terminal and the second local terminal.

According to another aspect, the present invention relates to a data buffering method for the cloud operating system. The data buffering method includes the following steps of: establishing at least one buffer among a plurality of nodes transmitting data over a network in the local terminal and the remote computing device; and generating continuous data within the data buffer based on previously received data of the nodes to enable continuous data reading by the nodes reading data from the data buffer.

According to another aspect, the present invention relates to a proxy service method for the cloud operating system, wherein the remote computing device includes a cloud server and at least one virtual machine generated within the cloud server. The proxy service method includes the following steps of: retrieving cloud operating system data and application storage data from a user database in the cloud server, based on a user account associated with the local terminal of the user; correspondingly allocating at least one virtual machine having the cloud operating system data and the application storage data for the user account; providing system scheduling among a plurality of virtual machines, and providing each virtual machine with a proxy unit for communication between the local terminal and the virtual machine; and exchanging data transmission packets among the proxy units of a plurality of the virtual machines.

According to another aspect, the present invention relates to a method for generating a user application based on the cloud operating system, including the following steps of: providing an application store client in the remote computing device via an application service module, wherein the application store client connects to an application store server to acquire an icon and an installation link of a user application; receiving a user application adding request triggered by a user operation on a local terminal, and acquiring the icon and the installation link through the application store server; retrieving user application storage data associated with the user account from a user database; and loading the user application into the remote computing device by the application service module with the installation link, and importing the storage data to the newly generated user application.

According to another aspect, the present invention relates to an input method based on the cloud operating system, wherein the cloud operating system is configured in a remote computing device, the remote computing device is connected to a local terminal via a network to transmit graphics interface images to the local terminal, and the local terminal serves as a user operation terminal. The input method includes the following steps of: acquiring a user input operation on a local terminal, the user input operation including a user voice operation or a touch operation on a local graphics interface; converting the user input operation into voice recognition phrases or a command for an runtime graphics interface in the remote computing device; activating an input panel based on the speech recognition phrases or the operation command, and generating first language data; and retrieving second language data associated with the first language data from a remote lexicon to present the first language data and/or second language data on the runtime graphics interface, wherein the remote lexicon receives local input data from the local lexicon of the local terminal, and the remote lexicon is synchronized with user input data stored in the user database.

According to another aspect, the present invention relates to a method for opening a user application for the cloud operating system. The method for opening the user application includes the following steps of: capturing a user input operation on a local terminal, the user input operation including a user voice operation or a touch operation on the local graphics interface; determining an operation object of the user input operation within the current runtime graphics interface of a first user application, in the remote computing device; and determining that the operation object is associated with a second user application, generating a runtime graphics interface of the second user application upon capturing a message permitting the launch of the second user application, allowing the runtime graphics interface to overlay at least a portion of the graphics interface of the first user application, and allowing the first user application to continue running.

According to another aspect, the present invention relates to a computer-readable storage medium storing program instructions, which when executed by a processor, cause the processor to implement any of the above-described methods.

According to another aspect, the present invention relates to a mobile computing terminal including: a network communication module connected to a cloud server; an image processor for processing graphics interface image data transmitted from the remote computing device; a screen for displaying the graphics interface image data; and the computer-readable storage medium.

According to another aspect, the present invention relates to a cloud computing server including: at least one remote computing device including one or more virtual machines; a central proxy service center connected to the one or more virtual machines, for performing system scheduling among the virtual machines and allocating cloud operating system data; and the computer-readable storage medium.

Therefore, the present invention provides a comprehensive cross-platform cloud operating system solution compatible with various smart terminals, offering a unified user application ecosystem with rich user experiences and simplified program development. The invention further provides various methods based on the cloud operating system to achieve stable and efficient interface interaction and data transmission between local and remote entities.

### BRIEF DISCRIPTION OF THE DRAWINGS

FIG. 1 shows an architectural diagram of the cloud operating system according to the invention in some embodiments.
FIG. 2 shows the associations between a graphics interface generation unit of the cloud operating system and various local terminals in an embodiment.
FIG. 3 shows the interaction between the graphics interface generation unit of the cloud operating system and a local terminal in an embodiment.
FIG. 4 shows the image interaction association between the components of the cloud operation desktop on the local terminal and the cloud operating system in an embodiment.
FIG. 5 shows a solution for generating GUIs and layout interfaces that correspond to various terminal types in the cloud operating system in an embodiment.
FIG. 6 shows the cloud operating system deployed on a cloud server generating various GUIs for different local terminals.
FIG. 7 shows a universal driver redirection in the cloud operating system in an embodiment.
FIG. 8 shows an example of the driver redirection in the cloud operating system in an embodiment.
FIG. 9 shows a data transmission method between the local terminal and the cloud server in an embodiment.
FIG. 10 shows details of the data transmission method between the local terminal and the cloud server in an embodiment.
FIG. 11 shows details of a method for transmitting the location data between the local terminal and the cloud server in an embodiment.
FIG. 12 shows a method for user APP data transmission between the local terminal and the cloud server in an embodiment.
FIG. 13 illustrates a redirection transmission method for multimedia data between the local terminal and the cloud server in an embodiment.
FIG. 14 shows a release process for a user APP in an embodiment.
FIG. 15 shows an example of the release process for a user APP in an embodiment.
FIG. 16 is a flow diagram illustrating the releasing and installing for a user APP in an embodiment.
FIG. 17 shows a method for integrating functions into a user APP in an embodiment.
FIG. 18 shows a remote input method between the local terminal and the cloud server in an embodiment.
FIG. 19 shows switching an interface of a user APP based on the cloud operating system in an embodiment.
FIG. 20 shows the opening and switching among a plurality of user APPs based on the cloud operating system in an embodiment.
FIG. 21 shows a call from a remote user APP to the local APP on the basis of the cloud operating system in an embodiment.

### DETAILED DESCRIPTION

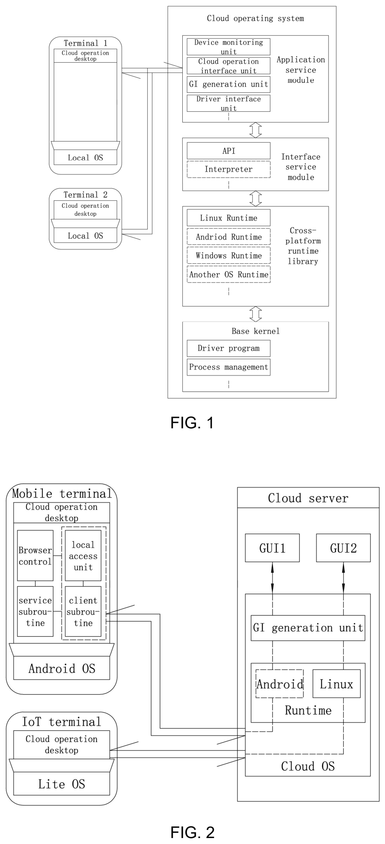

With reference to FIGS. 1 to 21, in multiple exemplary embodiments, the entire technical solution of the present invention involving terminals, devices, systems, architectures, methods, processes and various software and hardware components is described in detail.

### 1. Deployment and Architecture of Cloud Operating System

Referring to FIG. 1, the cloud operating system according to the present invention is set up in a remote computing device instead of being deployed in a local terminal. The remote computing device is associated with the local terminal via a network, which serves as a user operation interface.

### 1.1 Local Terminal and Remote Computing Device

In some embodiments, the local terminal includes a display screen, network communication hardware, and a local operating system. Specifically, the local terminal can be a smartphone, a tablet, a portable computer, a game console, an automotive infotainment system, a smart home appliance, or other network-connected computing terminal with a display screen across operating system platforms (such as, Android, iOS, Windows and Linux). In some embodiments, the remote computing device can involve any one or more of a cloud computing server (referred to as cloud server), a virtual machine (VM), a container, and a personal computer (PC). Preferably, the cloud operating system according to the present invention is deployed on a cloud server which provides at least one VM for interacting with the user's local terminal. Additionally, in some embodiments, at least a part of the cloud operating system can be deployed in a VM or a container. The technical solution of the present invention is mainly described in the form of the remote computing device implemented as the cloud server and VM. It should be understood that, within the principle of the technical solution of the present invention, the VM can be replaced by any container or physical computing device to comply with the solution of the present invention.

At the cloud cluster architecture level, the cloud server includes, but is not limited to, foundational equipment, a compute server, a scheduler, an automation component and a network manager. In the cloud cluster architecture, a plurality of distributed redundant servers are supported, in which the cloud server can be integrated from various hardware resources within the cloud environment, so as to provide a distributed physical runtime environment for a plurality of cloud operating systems.

Specifically, the foundational equipment is the hardware and software foundation of the cloud server, including computer hardware (such as, CPU, memory, hard drive, graphics card, network switch, etc.), cloud computing underlying operating system, database, and other software component. The computing server integrates resources through virtualization and clustering technologies, while also generates relevant host resources on demand via a cloud control platform. Specifically, by the virtualization technology, the computing and storage resources are distributed to small and independent VMs for independently operating and managing. The computing server typically runs a cloud computing software, which is deployed with a central proxy service center preferably. The automation component execute repetitive tasks such as load balancing, backup, recovery, etc. The network manager provides cloud computing network services, establishing network channels connecting cloud servers and local terminals. It can also be mobilized by the central proxy service center to manage all computing servers, shared storage, and networks within the entire cloud cluster architecture. Preferably, the cloud server provides a stable, highly secure user database with backup-synchronization mechanism. The database mobilized by the central proxy service center can allocate data storage space per user account.

The cloud server and the local terminal are network-connected via the communication device, by means of a wired connection, a wireless connection, or any combination thereof. Specifically, the communication network, such as mobile communication (preferably 4G, 5G, or next-generation mobile communications), wide area networks or Ethernet can be used between the local terminal and the cloud server. In an embodiment, the technical solution of the present invention involves a network switching method for the cloud operating system, including: triggering the local terminal to switch either the communication network or the communication addresse of the cloud server according to signal strength and/or signal delay in the network. In an embodiment, the local terminal can be triggered to monitor the signal strength of the currently connected primary communication network (such as, 5G network) according to operation scenarios, user commands, or scheduled intervals. Additionally, the local terminal can execute a background Ping command to acquire the communication latency to the primary network address of the cloud server. If the signal strength falls below a signal strength threshold (the threshold value ranging from -100 dBm to -75 dBm), or if the communication delay exceeds a delay threshold (the threshold value ranging from 100 ms to 200 ms), the terminal can switch to a second communication network with lower carrier frequency (such as, 4G network) or switch to the second network address of the cloud server.

### 1.2 Cloud Operation Desktop

In some embodiments, the local terminal can include and run various types of local operating systems (hereinafter referred to as OS), such as Android, iOS, Windows, Linux, etc. The local OS can switch between a basic mode and a cloud computing mode. In the basic mode of the OS, only fundamental communication functions (such as, phone calls, sending and receiving text messages) and local foundational applications (such as, browser, camera, audio player and video player) are provided. In the cloud mode, via high-speed network, the interaction between a cloud operating desktop in the local terminals and the cloud OS deployed in the cloud server is provided for the user to access rich software and hardware resources and the user application (User APP, hereafter referred to as UAPP).

In some embodiments, the cloud operating desktop includes: a control or an add-on of a graphics interface (hereinafter referred to as GI) depending on a browser unit for providing a graphics user interface (GUI) for operating and a functional extension associated with the GI; a local access unit connected to the control or add-on of the GI, wherein the local access unit is used to capture real-time user action data and to access local application (APP) information and hardware information in the local terminal; at least one service unit connected to the control or add-on of the GI, for providing various interaction functions and processes between the local terminal and the remote system; at least one client unit connected to both the service unit and the local access unit, for communicating and transmitting data with proxy service programs in the remote computing device. The service unit and the client unit can be implemented as a subroutine, a program module, or a similar procedure module.

The cloud operation desktop can be implemented as a standalone APP (such as, a native APP, system-level built-in APP, or an installable APP), a web APP (such as, JavaScript (i.e., JS) application based on HTML5 (HyperText Markup Language 5) framework), or an add-on depending on an application (such as, browser) supported by the local OS, etc.

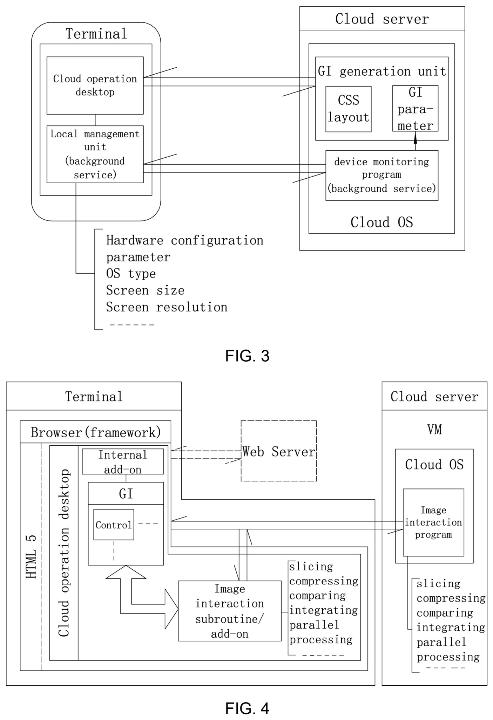

Referring to FIGS. 2 and 3, in an embodiment, the cloud operation desktop is implemented as a native APP or a hybrid APP. The cloud operation desktop can include a browser unit, a local access unit, at least one service subroutine, and at least one client subroutine. The browser unit can be a (web) browser architecture program module or a browser subroutine integrated in the cloud operation desktop APP, in which various browser controls and add-ons are provided. The service subroutine executes an optimized algorithm for local-remote interaction. For example, the image interaction subroutine from the service subroutines interfaces with a UI control of the browser unit to enable a graphics interaction for filtering, slicing, compressing, comparing, integrating, or parallel processing images transmitted between the local terminal and the VM of the cloud server. It should be understood that, in the embodiment, other service subroutines are also provided to implement control interaction, GI image transmission and display, data redirection, dynamic data adjustment method, between the local and remote devices. The local access unit can be implemented as a subroutine to call the local application programming interface (local API) based on the local OS. The local access unit can also interface with a local management unit external to the cloud operation desktop to acquire local data. The local management unit can be implemented as a background service program in the local terminal, continuously transmitting local data to a device monitoring program running in the background in the cloud server. Meanwhile, the client subroutine interfaces with the local access unit to read and transmit data of the hardware of the local terminal. The communication method implemented in the client subroutine enables network communication between the cloud operation desktop and the service program on the cloud server. Subsequently, the communication data received by the network hardware from the cloud server is read via the local access control.

Referring to FIG. 4, in an embodiment, the cloud operation desktop is implemented as a Web APP, an add-on program, etc., running within a browser (framework) in a local terminal. The cloud operation desktop within the browser framework also includes a GI control for image interaction with the GI of the remote VM. Additionally, the cloud operation desktop can include an image interaction service subroutine for slicing, compressing, comparing, integrating, or parallel processing of GI images transmitted between the local terminal and the VM in the cloud server. Furthermore, in another embodiment, other service subroutines can be added to the browser application program via additional add-ons to interface with the cloud operation desktop in the browser application. The scripts in the service subroutines are interpreted by the JS engine (such as, V8, WebKit) within the local browser framework to call Local APIs or Web APIs from the web server, so as to enable various control interactions, GI image transmission and display, data redirection, and dynamic data adjustments, between the local and remote devices.

It should be understood that the API mentioned above and below can be defined to call a program and to provide a service, as well as to provide data or execute an operation or to compute parameters transmitted by the procedure codes of other software (such as, operating system, inventory program, function). An API can be implemented for one or more calls to the program codes. In the calls, one or more parameters are sent and received by means of a parameter list or other structure based on a call convention defined in the API specification documentation. The parameter is such as constant, key, data structure, target, target class, variable, data type, pointer, array, list, or another call. The API call and parameter can be implemented in any programming language. The programming language is defined as the vocabulary and the call convention used by a programmer to access the supporting function of the API.

### 1.3 Basic Architecture of Cloud Operating System

Referring to FIG. 1, in some embodiments, the cloud OS according to the present invention includes a base kernel, a runtime library, an interface service module, and an application service module.

The base kernel includes, but is not limited to, a process management unit, a driver program, a memory management unit, a virtual file system, to invoke physical and/or virtualized hardware resources of the cloud server in response to requests. The base kernel of the cloud OS consists of a kernel of the underlying OS of the cloud server, preferably a Linux kernel.

Upon the base kernel, the runtime library provides a runtime environment for APPs across various OS platforms. In an embodiment, the runtime library is a computer program library, through which a compiler of programming language of each OS platform can implement a built-in function with the programming language, thereby providing runtime (or execution) support for a program written in the programming language. Preferably, in addition to the Linux runtime library provided by default in the cloud OS according to the present invention, other runtime libraries of Android, Windows or mac OS can also be installed and provided, so as to enable the execution of the application programs of Android, Windows or mac OS, particularly the browser framework program across various platforms and kernels (such as, Safari, Edge, Firefox, Chrome, open-source Chromium, etc.), in the cloud OS.

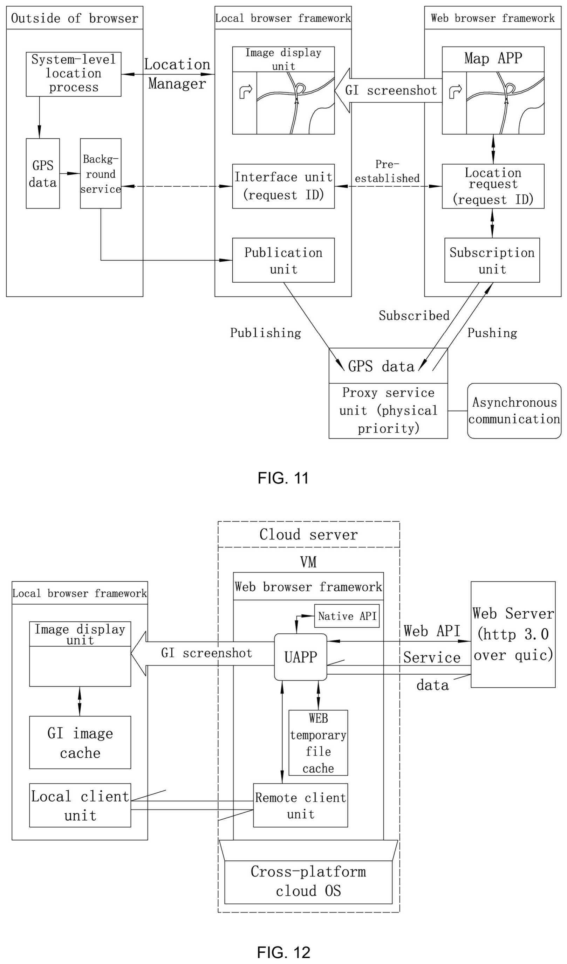

The interface service module provides application programming interfaces (API) corresponding to the runtime library. The interface service module can also include an interpreter, an engine (such as, V8, WebKit), or a runtime module (such as, Node.js or customized lite JS runtime) for interpreting and executing UAPP procedure codes (such as, JS script codes). Additionally, the interface service module can provide a Web API for accessing network services, resources, or functionalities from a Web Server, as illustrated in FIG. 12.

The application service module provides operational GI services and UAPP services for the local terminals, supporting the interactions of the services between the local and remote devices. The application service module includes a communication unit, a device monitoring unit, a GI generation unit, a cloud operation interface unit and a driver interface unit, wherein the units can be implemented as background service programs, subroutines, program modules, or other equivalent programs.

By means of the communication unit, the communication is implemented between the local terminal and the VM in the cloud server, as well as between the devices (or VMs) in the cloud server that are associated with the local terminals. The data transmission method will be detailedly described in some embodiments in Section 4.

The device monitoring unit acquires hardware parameters and real-time operating status data from the local terminal. Referring to FIG. 3, in an embodiment, the device monitoring unit can be implemented as a device monitoring program within the cloud server's background service, which acquires the local terminal's hardware configuration parameters (such as, network type, memory size, storage capacity, processor type, multimedia device type, etc.), type & version of local OS (such as, iOS, Android, Windows, Linux, lite IoT (Internet of Things) OS, etc.), screen size, screen resolution, display refresh rate, and input device type (such as, touchscreen, mouse, keyboard, recording device, operator, etc.), after an authenticated connection between the local terminal and the remote computing device. The device monitoring unit also receives the current status and data of local applications (including a built-in program of the local OS and a local application), such as network communication quality, local performance, local application action data, geographic location data, user command data, etc.

Referring to FIGS. 3, 5, and 6, the GI generation unit generates a runtime GI of the UAPP according to the local terminal's hardware parameters. In some embodiments, the GI generation unit generates a GI environment for presenting a UAPP, based on the GI style and the default operational habit corresponding to a user account, and the hardware configuration parameters collected by the device monitoring unit, wherein a VM background service program running in the cloud server captures the runtime GI of the UAPP, generates a GI image and transmits to the cloud operation desktop on the local terminal. The GI generation unit can generate the runtime GI for the UAPP based on a GI manager within the runtime library. Preferably, the GI generation unit generates the runtime GI for the UAPP using a renderer and an interpreter (or engine) within the browser framework. The GI generation method will be detailedly described in some embodiments in Section 3.

The cloud operation interface unit is invoked by the background service program to receive user action data (such as, action data from a touchscreen, a mouse, a keyboard, etc.) in real-time from the local terminal, and convert the data into operation data for the VM in the cloud server.

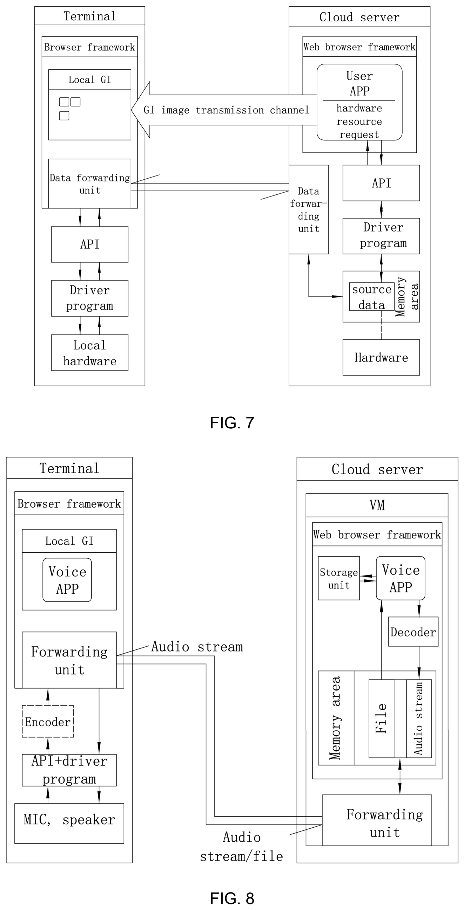

The driver interface unit redirects source data intended for hardware execution from the remote computing device to the hardware of the local terminal, in response to a hardware resource request from the UAPP. Referring to FIG. 7, in some embodiments, the present invention relates to a driver redirection method including: invoking a first data conversion program to generate source data to be cached in a memory area in a remote computing device, in response to a hardware resource request initiated by a UAPP via an API; capturing, by the driver interface unit, the source data from the memory area, where the source data is to be acquired by the remote computing device's hardware (such as, bitmap data that a graphics card driver needs to read, a standard digital audio file (WAV) that a sound card driver needs to read) upon being triggered by a driver program; (compressing and) forwarding the source data to the local terminal by a remote data forwarding unit; interfacing the hardware resource via an API, by the background service unit of the local terminal, in response to a command of the driver interface unit; invoking a second data conversion program to receive (and decompress) the remote source data through the local data forwarding unit, such that the remote source data is transformed to the output data of the second data conversion program; and triggering the local hardware to apply the output data instead of the local source data by a local driver. Preferably, the first and second data conversion programs are of the same type and functionality. Similarly, a method of driver redirection from the local terminal to the remote computing device can include: capturing blank source data for remote computing device hardware upon being triggered by a driver program, in response to a hardware resource request initiated by a UAPP via an API; invoking a third data conversion program to generate a blank file from the blank source data to be cached in a memory area; capturing actual source data simultaneously for a local hardware upon being triggered by a driver program of the local terminal, in response to an instruction of the driver interface unit; invoking a fourth data conversion program to generate a target file from the actual source data for forwarding to the remote computing device by the data forwarding unit; replacing the blank file with the actual target file; and acquiring the target file by the UAPP. Preferably, the third and fourth data conversion programs are of the same type and functionality.

Referring to FIG. 8, in a specific embodiment, an audio application (Voice APP) runs within a VM in the cloud server, while the local terminal displays the GI of the Voice APP thereby enabling the user to operate the Voice APP remotely. When the user of the local terminal interactively operates the Voice APP to play an audio file (such as, an MP3 file) in the storage unit, the WAV audio stream, which is decoded by an audio decoder and stored in the memory area temporarily upon being triggered by the Voice APP calling an API, is originally intended for the VM to call the VM hardware to play, but it is actually forwarded to the local terminal. The driver-interface unit synchronously instructs the background-service unit of the local terminal to invoke the local audio decoder through an API. However, the local audio decoder does not actually decode the WAV audio stream; instead, the local data forwarding unit redirects the remote WAV audio stream data as the output result of the local audio decoder, thereby the output is supplied to the local hardware for playing upon being triggered by a driver program of the local OS. Referring again to FIG. 8, in another specific embodiment, when the user interactively operates the Voice APP for local recording,
the Voice APP initiates a hardware resource request through an API, causing the driver program to trigger the VM hardware to record audio (actually empty audio stream is recorded), thereby calling the encoder in the VM to generate a blank file from the source data to be cached in memory. In response to an instruction from the driver interface unit, the local terminal driver program is simultaneously triggered via a local API to activate the local microphone hardware for recording a WAV audio stream. The encoder is then invoked to generate a compressed target audio file (such as, an MP3 file) for forwarding to the remote computing device by the data forwarding unit, replacing the above blank file. Subsequently, the Voice APP acquires the target audio file to complete storage of the recorded file.

In some embodiments, driver integration can also be achieved through interaction between local and remote browser framework programs, as detailed in the following embodiments in Section 2.

It should be understood that, over a cross-platform system environment established via a network between the local terminal and the remote computing device, the cloud OS of the present invention restructures the traditional OS application framework layer into simplified interface service modules and tailors an application service module to facilitate interactions between the local terminal and the remote computing device with respect to control, hardware resources, and interfaces. These improvements enhance program-execution efficiency and ensure a seamless user experience during remote operations.

In these embodiments, the cloud OS of the present invention is characterized by deploying at least a portion of the system on one or more selected from the group consisting of a cloud server, a VM, and a container. For example, the foundational kernel of the cloud OS is provided by the OS kernel of the cloud server and the VM. The interface service module and the runtime library can be installed and provided in a VM, while a template of the application service can be deployed in a VM and/or a container. The container (also referred to as cloud-service container) and the VM both leverage virtualization technology for convenient creation and migration. In a VM, a complete native OS and hardware environment is created through hardware virtualization. By contrast, in a container an isolated runtime environment is established in a computing device (also a VM) without requiring emulated hardware. Consequently, the container is lighter, start faster, and consume fewer resources, making it better suited for deploying lightweight applications. In consequence, the cloud OS of the present invention leverages massive server computing power to provide each user with cross-platform, multi-device environments for running UAPPs, thereby rendering the UAPP development process more flexible, efficient, and unified.

In these embodiments, the cloud OS of the present invention further features remote computing devices transmitting GI images to local terminals for users to operate UAPP locally. Compared with transmitting real-time screen-capture video streams from the GI, transmitting GI images reduces network bandwidth consumption and eliminates the need for local terminals to consume computational resources for video decoding. Furthermore, high-definition image compression algorithms are well-established, allowing users to experience high-definition graphical-interface imagery while maintaining low-latency control response when using the cloud OS.

### 2. Browser Framework

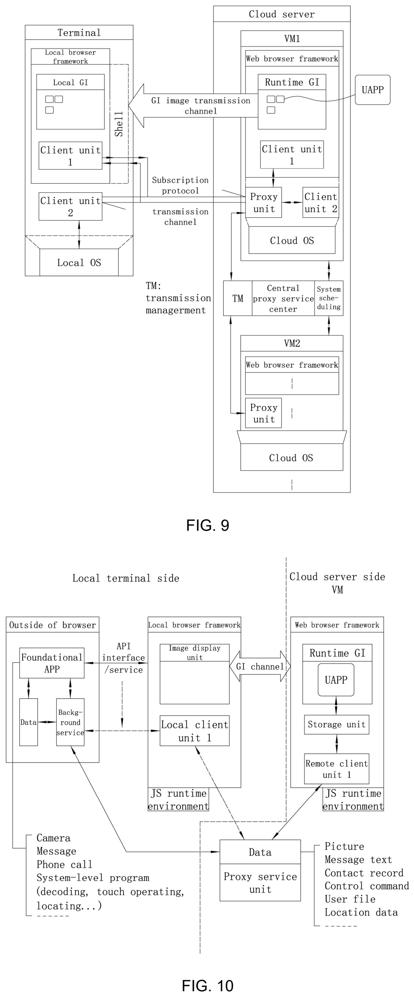

Referring to FIG. 9, based on the cloud OS, a remote browser framework (also referred to as a web-browser framework) can be provided for each VM generated in the cloud server. Correspondingly, the local OS on the terminal device can include a native browser framework to interact with the remote browser framework. Both the remote and local browser frameworks share a foundational architecture including a browser GI, a browser kernel, and a backend service layer. The browser GI is configured to render a web page or application window. The browser kernel can include a browser engine and a rendering engine for page presentation. The browser engine could be V8, WebKit, etc., while the rendering engine can encompass an HTML parser, CSS (Cascading Style Sheets) parser, and layout engine. Typically, the rendering engine and the kernel for Safari are the same as WebKit; the kernel for Chrome/Chromium/Edge is Chromium, and its rendering engine is Blink (a WebKit fork). The backend service layer is configured to handle network connections, data storage, or invoking native services via an API.

Preferably, the backend service layer can incorporate a backend runtime module (such as, a JS runtime module) that enables JS to be executed outside the browser, as shown in FIG. 10. For example, the V8 engine can run Java scripts externally to implement at least the function of a file systems, a module, a system API, network communication, and a general application. The backend runtime module can be integrated with an existing JS runtime environment tool (such as, Node.js) or a customized, lite JS runtime that retains only specific functions. In an embodiment, the backend runtime module can include a JS engine, a native module, and a standard library, thereby enabling directly invoking a native API.

### 2.1 Local Browser

In general, the built-in browser in local terminals of smart platforms can be configured to interoperate with the cloud OS according to the present invention. If the local browser lacks a suitable browser engine, additional toolkits can be installed to implement a local runtime environment based on a specific browser engine, thereby rendering a local browser compatible with the cloud OS of the present invention.

In some embodiments, the local browser compatible with the cloud OS of the present invention can include: a client unit for communicating between the local browser and other applications running on the local OS, and for acquiring data from the local terminal and remote computing devices; a display component for displaying GI images from the remote computing devices; and an image interaction service unit connected to the display component for implementing GI image transmission and interaction methods. Specifically, the display component can include a WebView control that is compatible with a local browser in the operating system such as Linux, Android, Apple's OS, Google's OS, etc. Based on the local browser framework, a backend runtime module is provided to support the execution of a client unit and an image interaction service unit. Additionally, it is further configured to provide an execution environment for the cloud operation desktop for various subroutines and program modules written in JS.

### 2.2 Remote Browser

In some embodiments, the cloud OS of the present invention can be configured to provide a plurality of runtime libraries (such as, Android, Mac), so that various browsers (such as, Chrome/Chromium, Safari) can be embedded within the VM generated in the cloud server, thereby matching the kernel type of the local browser (such as, Chromium, WebKit) and improving compatibility and runtime efficiency of the UAPP. Furthermore, because the Chromium kernel shares the same origin as the WebKit kernel, a Chromium-kernel browser compiled for Linux is pre-installed by default in each VM instantiated by the cloud OS, thereby ensuring that the browser (or browser framework) within the VM is compatible with the base Linux kernel and the default runtime library set of the cloud OS.

In some embodiments, the remote browser can include: a client unit for communicating the browser application with other applications running on the cloud OS and for acquiring data from the local terminal and remote computing device; and a GI image acquisition unit for capturing at least a portion of the GI image from the UI of a web-based UAPP running within the remote browser, wherein the client unit and the GI image acquisition unit are respectively connected to an image interaction service program in the cloud OS, the image interaction service program being configured to implement the GI image transmission and interaction methods. Based on the remote browser framework, a backend runtime module is provided to support the execution of a client unit, a GI image acquisition unit, and an image interaction program.

### 2.3 Application Service Integration Based on Browser Framework

In a preferred embodiment, when the kernels of the remote and local browser frameworks are consistent or compatible and are further configured to use the same back-end runtime module, application service integration and driver redirection within the cloud OS are rendered flexible and simplified. For example, scripts that call an API in a UAPP running on the remote browser framework may reuse codes within the local browser to call a local API of the same type or functionality synchronously, thereby greatly facilitating a remote UAPP access to local terminal resources.

Referring to FIGS. 7 and 8, a process of a UAPP invoking local terminal hardware resource is illustrated how the API and driver redirection method is achieved through the remote and local browser frameworks. Firstly, the UAPP running within the remote browser framework of the VM renders a web page that is displayed in the browser GI. This page, serving as the runtime GI of the UAPP, is captured as a screenshot by the GI image acquisition unit and transmitted to the local browser for display on the local GI. Secondly the user action data generated from the local GI is then transmitted to the VM to operate the UAPP through remote interaction. Since the remote browser is configured with a backend runtime module, when the backend runtime module initiates, in response to a command script of the UAPP, a request for VM hardware resource outside the browser (such as, audio/video decoding and playing, camera activation, etc.) via the native API of the VM, the driver interface unit triggers the back end runtime module of the local browser using the same command script, causing the local browser to initiate a local hardware resource request via the same API. The data originally returned from the VM hardware is thereby replaced with data generated by the local hardware and is returned to the UAPP, thereby achieving a configuration in which the UAPP invokes the hardware resource of the local terminal.

### 3. Methods for Graphics Interface

### 3.1 Graphics Interface Generation and Layout

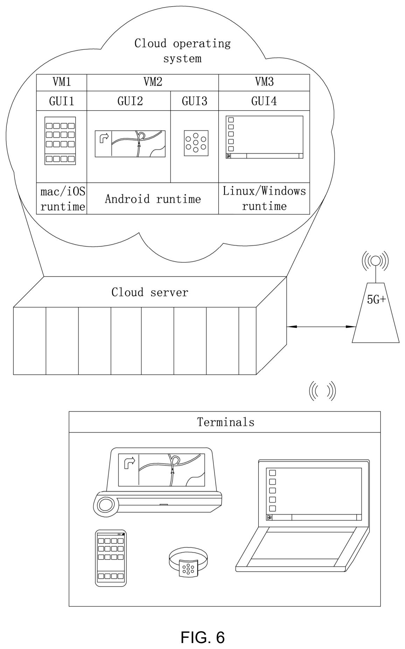

Referring to FIG. 2, in some embodiments, the remote GI generation method can include: establishing a network connection between the cloud server and each local terminal; acquiring user account information and hardware configuration parameters from each local terminal, wherein the hardware configuration parameters include, but are not limited to, a local OS type, a screen size, a display resolution, an inputting device type; generating a GI window within the browser on the cloud server for each local terminal based on the acquired screen size or the display resolution, the GI window serving as a UAPP GI environment; and capturing a GI image of the GI window and transmitting the image to the local terminal for display. In the embodiment, each VM in the cloud server can correspond to generating a GI for the local terminal associated with each user account. Furthermore, with reference to FIGS. 2 and 6, the VMs corresponding to the operating systems or runtimes can be allocated based on the types of local terminals. For example, a local terminal running Android OS is assigned a VM running Android OS, Linux OS, or a respective runtime, thereby enabling the remote GI generation unit to generate a default GI that matches the GI style of the local terminal.

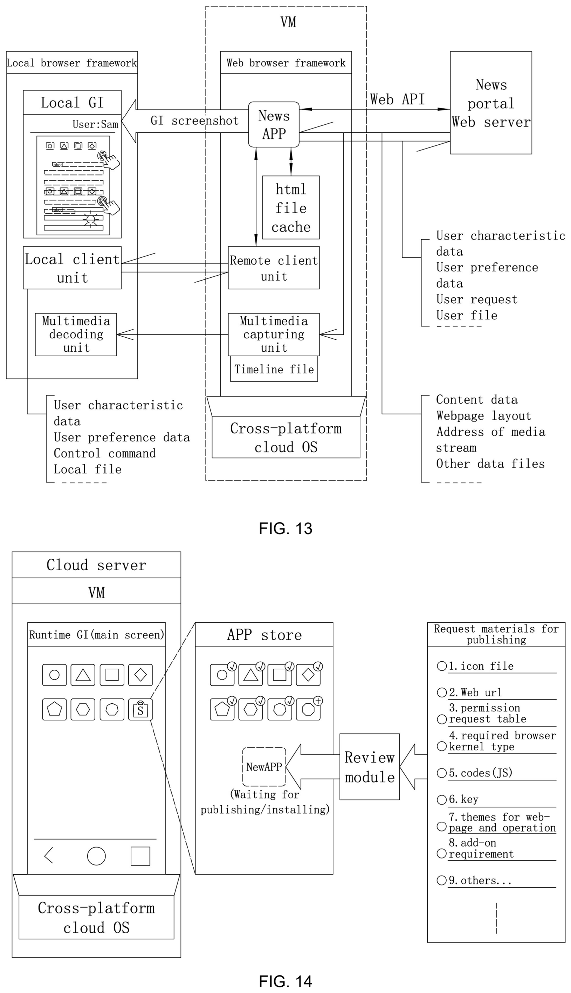

Referring to FIG. 3, in some embodiments, the local hardware configuration parameter can be acquired through a local management unit connected to the cloud operation desktop. The local management unit can be implemented as a background service program in the local terminal, continuously transmitting local hardware configuration parameters to a device monitoring program running in the background of the cloud server. Additionally, the renderer of the browser framework in the remote computing device incorporates HTML and CSS interpreters and, by means of a JS engine, processes script files (referring to FIGS. 12 and 13) that are locally cached or received from a web server to generate the runtime GI of UAPP. Specifically, the aspect ratio of the GI window displayed by the display control matches that of the local terminal screen, while the DPI of the GI window is greater than or equal to the DPI of the local terminal screen, thereby enabling the cloud server to utilize its higher computational power to generate high-definition images or to decode and play high-definition videos for full display within the GI window. Subsequently, the screenshot of the running GI is converted into a GI image (which can be further compressed as required for network transmission) by means of a screenshot add-on or subroutine running within the browser framework of the remote computing device. The local terminal is provided with a browser framework configured to enable a browser display control (such as, WebView) to receive the GI image for display on the screen of the local terminal. Preferably, a video playing control is also be provided. Upon detection that the GI of the cloud server's VM contains a video playing window, the GI image transmitted from the cloud server is adjusted to retain only the image area of the video playing window. A video stream is then redirected to a corresponding video control window on the local GI for playing. Therefore, after the remote GI is generated, the local terminal can receive the size and position data of the video playing window, thereby enabling the local video control to be arranged and overlaid on the received GI image according to the size and position data.

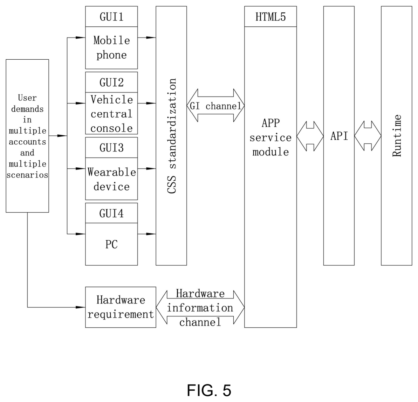

Referring to FIGS. 5 and 6, the remote GI generation method can include: retrieving the GI style and operational habits corresponding to a user account or local OS type from the user database on the cloud server; generating a browser window within the browser framework of the cloud server VM based on the acquired screen size or resolution of the local terminal; configuring the renderer to generate the GI layout based on the GI style; and determining operational gestures for the browser window based on the operational habits, thereby establishing a GI environment for the UAPP running within the browser framework. In specific embodiments, a user can own several local terminals, such as a smartphone, a smart vehicle, a wearable device, and a portable PC. In VMs, browser windows can be generated corresponding to the hardware configuration parameters of each local terminal belonging to the user. These windows concurrently adopt the same CSS standard-layout interface, enabling the same UAPP script codes to present GIs that are respectively tailored to the styles of the various local terminals within separate VM runtime environments. For example, for the same map APP, a compact, portrait-oriented GI optimized for mobile phones is generated in a VM, while a large-screen GI tailored for in-vehicle navigation is generated in another VM. Furthermore, as illustrated in FIG. 6, several windows within the browser framework of a single VM (such as, VM2 in FIG. 6) can be generated with distinct local terminal-style GUIs (such as, GUI2 and GUI3 in FIG. 6), thereby enabling the user to quickly access the preferred local terminal GI after logging into the VM, and delivering an enhanced user experience for a scenario requiring switching between different terminals while using the same APP. For example, a user can pre-receive graphics interface GUI3 via a wearable device and operate a map APP (actually running in VM2) to set a navigation destination via a voice command. The map APP then switches to the in-vehicle navigation map graphics interface GUI2 and transmits it to the user's logged-in smart car, thereby causing the vehicle's display to present the map APP's navigation GI for the destination when the user enters the vehicle. Therefore, when developing a UAPP, the CSS-based page codes for generating a UAPP GI is separated from the script codes that implements UAPP functionality.

### 3.2 Graphics Interface Image Transmission

Referring to FIG. 4, in some embodiments, a GI image transmission method for the cloud OS can include the following steps of:
S001. establishing an operation data interaction connection between a local terminal and a VM in a cloud server;
S002. transmitting GI images from the VM to the local terminal for at least a time period; and
S003. dynamically adjusting a GI image to be transmitted from the cloud server based on a transmission interval of the transmitted GI images from the cloud server to the local terminal.

In step S001, the operation data sent by the local terminal during interaction connection leads to a change in at least a portion of the GI in the cloud server. The operation data originates from action data from a local input device (such as, a touchscreen, a mouse, a keyboard, etc.) performing an input gesture such as a click, a movement, a zoom, etc. Upon transmission to the cloud server, the local operation data is allocated to the VM associated with the local terminal, thereby establishing a GI interaction between the VM and the local terminal based on the input action. The operation on the local terminal can trigger a change to the entire GI of the VM, to a portion of the GI, or to a background activity of the GI.

In step S002, based on the transmission connection between the local terminal and the VM in the cloud server, each time the operation data generated by the local terminal is sent to the VM, if such operation data leads a change to the GI of the VM, the cloud server transmits the GI image to the local terminal each time. In other words, the higher the frequency of operation data received by the VM, the greater the number of images typically transmitted to the local terminal. Preferably, a persistent connection network protocol can be utilized for the transmission of GI images between the local terminal and the cloud server to accommodate high-frequency image transmission.

In step S003, the dynamic adjustment of the GI image to be transmitted by the cloud server includes: determining whether, within a predetermined time period, the interval between image transmissions from the cloud server to the local terminal is too short (or the image is transmitted too frequent), if so, in a subsequent time period, performing any one or more of the following sub-steps of: reducing the number of images transmitted to the local terminal; reducing the quality of the entire GI image or a portion thereof through image compression; and transmitting only the dynamic changing portion of the GI image.

In step S003, in a specific embodiment, upon detection of a video playing window in the GI in the VM, the GI image to be transmitted from the cloud server is adjusted to retain only a window control image of the video playing window. This is because a video stream can be subsequently redirected for playing within the video window control in the local GI. Preferably, if the GI of the VM displays video in full-screen mode, the transmission of the GI image to the local terminal is paused, and only the video stream is directly transmitted to the local terminal for playing.

The following describes in greater detail the method flow and interaction steps involved in transmitting GI images on both the local and remote sides for the image transmission methods used for the cloud OS.

### 3.2.1 Local Side Method Flow

The image transmission method for the cloud OS on the local terminal side can include the following steps S110 to S119.

In step S110, a cloud operation desktop program is launched in the local terminal to activate a local control process to capture operation data from an input device in real time and to transmit the data to a remote computing device (such as a VM in a cloud server). Preferably, the cloud operation desktop program accesses a user information database in the cloud server to verify the user's login information (such as, account, password, fingerprint data, facial recognition data, etc.) for logging into a VM of the user in the cloud server and establishing a secure, encrypted operation data transmission channel from local to remote.

In step S120, a data transmission process running in a background program of the local terminal activates a dedicated channel of image data transmission for receiving GI image data from the cloud server. The image data transmission channel and the operation data transmission channel are independent of each other to ensure that the image data transmission is not disrupted by network connectivity issues during continuous transmission of operation data. Preferably, the transmission frequency of the image data transmission channel is configured to be lower than or equal to the transmission frequency of the operation data transmission channel.

In step S130, the GI image from the VM in the cloud server is continuously received during a predetermined time period via a persistent connection between the local terminal and the cloud server.

In step S140, if the frequency of received images is determined to be too quick (such as, the time interval Δtr between two image data receptions is less than a predetermined threshold Tr), the method proceeds to step S150; otherwise, the method jumps to step S160.

In step S150, according to the local terminal's status, a part of the GI images are received from the cloud server or the received GI images are filtered, thereby refreshing and displaying the GI of the local terminal. Preferably, the amount number of the filtered GI images can also be adjusted based on the local battery level, network status, application scenario, and other conditions. For example, when the local terminal operates in a power-saving mode or the workload of the local terminal's baseband chip exceeds a predetermined value, the transmission frequency of the image data channel is reduced, thereby lowering power consumption and heat generation. For example, when the local terminal connects to a with low-bandwidth network or is in a standby mode, the GI images are intermittently selected at an extended interval for display. In other embodiments, upon detecting that the transmission frequency of local operation data is less than a threshold ft, the GI images are selected intermittently at an interval for refreshing the GI of the local terminal. If no local operation data transmission is detected but the image reception occurs too quickly, the GI images are selected at an even longer interval for refreshing the GI of the local terminal.

In step S160, the display GI of the local terminal is refreshed with the selected GI images. Preferably, the partial or entire refresh of the display GI of the local terminal can also be triggered by any one or more of: a regular interval; switching of the local terminal's application scenario (such as, web browsing, work mode, gaming mode, etc.); a change of the local terminal's system state; or a user command initiating a specific refresh operation.

In step S170, it is determined whether the local terminal generates operation data for the remote VM (such as, whether the user operation on the cloud operation desktop is ended). If yes, the method proceeds to step S180; otherwise, the method returns to step S130.

In step S180, it is determined whether image data transmission between the local terminal and the remote server is finished (such as, whether the transmission channel is closed). If yes, the method proceeds to step S190; otherwise, the method returns to step S130.

In step S190, the current operation data is synchronized to the VM in the cloud server, and the entire GI image of the VM is synchronized to the GI of the local terminal. Finally, the process of the method is terminated.

### 3.2.2 Remote Side Method Flow

The image transmission method for the cloud operating system in the remote cloud server side can include the following steps S210 to S290.

In step S210, through the transmission process of the cloud server, user login data of the local terminal is acquired to initiate operation of a remote computing device (such as a VM generated in the cloud server) of the user, thereby enabling the VM to interface with operation data from the local terminal. Preferably, a plurality of VMs in the cloud server can be allocated to a user. The operation data transmission channel for each currently active VM of the user is individually associated with a specific operation data transmission process in the cloud operation desktop of the local terminal, thereby enabling the cloud operation desktop to switch control among the user's various VMs in the cloud server.

In step S220, an image interaction service program is executed in the cloud server or the VM to activate a dedicated channel for GI image data transmission from the VM to the local terminal.

In step S230, a screen capture process for the VM is invoked to continuously acquire the GI image of the VM.

In step S240, if the frequency of sending images is determined to be too rapid (such as, the time interval Δts between two image data receptions is less than a predetermined threshold Ts), the method proceeds to step S250; otherwise, the method jumps to step S260.

In step S250, the quality of the captured GI image of the VM is dynamically adjusted.

Regarding steps S240 to S250, in some embodiments, dynamically adjusting the GI images to be transmitted from the cloud server to the local terminal includes: detecting the current transmission interval Δts of GI images in the same GI area from the cloud server to the local terminal; upon determining the current transmission interval Δts to be less than a first time threshold Ts1, abandoning a GI image to be transmitted in the current time of transmission; and upon determining the current transmission interval Δts to be less than a second time threshold Ts2 (wherein Ts1 < Ts2), reducing the quality of the GI image to be transmitted (such as, by further image compression to reduce the quality of at least a portion of the GI image, or by reducing the resolution of the GI image).

In some embodiments, the first time threshold Ts1 can be configured to a smaller value, such as 20ms, while the second time threshold Ts2 can be configured as a value from a set of greater values (such as, 40ms, 60ms, 80ms) to reduce the GI image quality in a stepwise manner (such as, by an increased compression rate or a reduced resolution). For example, if the transmission interval is less than 40ms, the image is compressed to only 30% of the original file size; if the transmission interval is less than 60ms, the image is compressed to only 60% of the original file size; and if the transmission interval is less than 80ms, the image is compressed to only 80% of the original file size.

In other embodiments, dynamically adjusting the GI images to be transmitted from the cloud server further includes: detecting the current transmission interval Δts of GI images in the same GI area from the cloud server to the local terminal; determining that the current transmission interval Δts is greater than a third time threshold Ts3; and restoring the quality of the GI image to be transmitted (such as, by reduced-rate image compression or a lossless image compression), or acquiring a higher quality GI image from the cloud server for transmission to the local terminal. The third time threshold Ts3 is generally greater than the second time threshold Ts2. Preferably, the third time threshold Ts3 can be 100 ms or greater.

In other embodiments, dynamically adjusting the GI image to be transmitted from the cloud server further includes: detecting the current transmission interval Δts of GI images in the same GI area from the cloud server to the local terminal; determining that the current transmission interval Δts is less than a predetermined threshold Ts0; and reducing the resolution of the GI image to be transmitted, or converting the GI image to a grayscale image.

Preferably, the GI images transmitted from the cloud server to the local terminal can be pre-adjusted based on at least one of: current network transmission status between the local terminal and the cloud server, an application scenario (such as, web browsing, office work, gaming mode, etc.), and a user command. The pre-adjustment includes, but is not limited to, image resolution adjustment, color channel adjustment, or grayscale conversion. For example, if the network transmission speed or bandwidth to the local terminal from the cloud server decreases significantly to a value, the above pre-adjustment steps are executed directly, followed by step S250.

In step S260, via a persistent connection between the local terminal and the cloud server, the GI images are filtered and transmitted continuously to the local terminal during a predetermined time period. Preferably, a time stamp can be established between operation data and a GI image, thereby allowing each GI image captured (via screenshot) from the cloud server VM triggered by an operating action from the local terminal at a specific time point to be tagged with the time stamp. Consequently, the GI image received by the local terminal also carries the time stamp, enabling correspondence between the operating action and the displayed GI image in the local terminal.

In step S270, it is determined whether the remote VM is received the local terminal's operation data and whether the control process initiated by the operation data for the VM is finished. If yes, the method proceeds to step S280; otherwise, the method returns to step S230.

In step S280, it is determined whether image data transmission between the local terminal and the remote server is finished (such as, whether the transmission channel is closed). If yes, the method proceeds to step S290; otherwise, the method returns to step S230.

In step S290, the current operation data is synchronized to the local terminal, and the entire GI image of the VM is synchronized to the GI of the local terminal. Finally, the process of the method is terminated.

### 3.2.3 Operation data and Image Filtering

The operation data from the local terminal determines the generation and transmission of a GI image of the VM. In some embodiments, methods related to the operation can include the following general steps of: A. upon detecting a specific operation, an excessively quick action, an abnormal action or a similar situation, based on the type of local operation, sending filtered or adjusted operation data to the cloud server to prevent generating an unnecessary GI image; or B. dynamically filtering a plurality of GI images received by the local terminal based on a transmission interval of the operation data of the local terminal, and displaying on the local terminal the filtered GI image or at least a portion of the received GI image. In the general step A, the filtering of local operation data directly leads to a change of the GI of a VM in the cloud server and a variation of the image transmission frequency from the cloud server to the local device. Therefore, the general step A is referred to as an "active" step. The general step B involving filtering received images is referred to as a "passive" step. It should be understood that both an image reception module in the local terminal and an image transmission module in the remote device can operate independently to perform image filtering to locally received images and remotely transmitted GI images in accordance with the active step A and the passive step B. This flexibility constitutes the adaptability of the image transmission method according to the present invention, enabling image transmission optimization across various application scenarios based on remote operation.

In some embodiments, the general step A can be integrated into the control process in step S110 in the above embodiment. In these embodiments, the following steps S111 to S116 are implemented.

In step S111, the local control process is activated to capture operation data from an input device of the local terminal in real time.

In step S112, the operation data is capture and classified during a time period triggered by the operating action. In some embodiments, the classification is based on a user operation event, such as a click, a double-click, a single-finger swipe, a multi-finger swipe, a fingerprint recognition action, a physical-button press on the device, etc.

In step S113, it is determined whether a predetermined type of the operation event is occurred, or whether the operation action is excessively fast or abnormal. If so, the method proceeds to the next step S114; otherwise, the method jumps to step S115. In some embodiments, for each classification, the predetermined type of the operation event includes, but is not limited to, a prolonged press, a long-distance (such as, exceeding half the screen's width) swipe. The abnormal operation event includes a frequent back-and-forth touch drag, a simultaneous press of multiple buttons, or another similar action.

In step S114, the operation data from the local terminal is filtered or adjusted. In an embodiment, regarding the event of a frequent back-and-forth touch drag (as indicated by dashed arrows in FIG. 7), the generated operation data contains numerous path coordinates from repeated dragging motions, therefore the operation data can be filtered to retain only the coordinates of the initial and final touch points in the drag event, thereby preventing generating repetitive GI images of the VM from redundant operation data. In another embodiment, regarding a long-distance swipe event, only the start-point and end-point coordinates of the swipe are retained in the operation data. Additionally, regarding the abnormal manipulation event, the generated operation data can be directly blocked to prevent from being transmitted to the remote server.

In step S115, operation data is transmitted to the VM in the remote cloud server.

In step S116, after waiting for a predetermined duration, it is determined whether the next operation event occurs. If yes, the method returns to step S112; otherwise, the method ends.

In some embodiments, the general step B can be integrated into the control process in step S150 in the above embodiment. The dynamic filtering of a plurality of received GI images based on an operation interval between operations of user in a local terminal can include the following steps of:
S151. determining, for at least a time period, that the operation interval of the local terminal Δtc is less than a fourth time threshold Tc4 (preferably, the fourth time threshold Tc4 can be predetermined within the range of 10 ms to 20 ms based on the operation type);
S152. discarding at least one of the GI image received from the remote computing device that is intended for display on the local terminal (such as, an intermediate redundant image generated repeatedly due to a frequent operation event in the local terminal, as shown in FIG. 7), and subsequently reducing the transmission frequency of operation data from the local terminal to the cloud server VM as needed.

In some embodiments, the dynamic filtering of a plurality of received GI images based on an operation interval further includes the following steps of: determining, for at least a time period, that the operation interval of the local terminal Δtc is more than a fifth time threshold Tc5 (corresponding to a typical frequency the user operates the local terminal), and retaining all received GI images for at least display on the local terminal; and determining, for at least a time period, that the operation interval of the local terminal Δtc is more than a sixth time threshold Tc6 (corresponding to the user not operating the local terminal for an extended period), and intermittently selecting GI images for display on the local terminal from the received GI images until the next operation of the local terminal occurs, thereby achieving a local standby effect and reducing the local terminal's power consumption. The sixth time threshold Tc6 is greater than the fifth time threshold Tc5, and the fifth time threshold Tc5 is greater than the fourth time threshold Tc4. The value of the fifth time threshold Tc5 can be greater than 200 ms, and the value of the sixth time threshold Tc6 can be greater than a predetermined number of seconds.

In an embodiment, the method further includes determining that the operation interval Δtc of the local terminal is more than a seventh time threshold Tc7 during at least one time period, and reducing the display frame rate of the local terminal until the next operation occurs, wherein the seventh time threshold Tc7 is greater than the fifth time threshold Tc5. The solution in the embodiment can be applied when the local terminal has no operation for an extended period (such as, during reading scenarios), thereby reducing the display power consumption of the local terminal.

In some embodiments, the method can further include the following steps of: determining that a movement amplitude (or distance) among a group of operating points for a gesture on the local terminal exceeds a predetermined amplitude threshold; and retaining the GI images associated with the operating points corresponding to the start and end actions of the gesture from the GI images transmitted from the cloud server to the local terminal due to the operation data generated from the group of operating points, thereby reducing other GI images for display on the local terminal.

Additionally, an operation frequency of a user with the human-machine interaction (HMI) device can be monitored by a local subroutine in the local terminal. In a preferred embodiment, if the operation frequency of a group of operations is low (such as, below a predetermined threshold), the quality of the image transmitted from the cloud server to the local terminal can be enhanced, and/or the refresh rate of the local terminal's display (or GI) can be reduced; if the operation frequency is high (such as, above a predetermined threshold), the quality of the image transmitted from the cloud server to the local terminal can be reduced, and/or the refresh rate of the local terminal's display (or GI) can be increased; if the operation frequency is excessively high (such as, above a higher threshold), a last frame GI image of the VM corresponding to the last operation of the group of operations is transmitted to the local terminal, while the remaining GI images generated by the other operations from the group of excessively high-frequency operations in the local terminal are not transmitted to the local terminal, or these remaining GI images are compressed at a high compression rate (or even subjected to lossy compression).

### 3.2.4 Interaction between Remote VM and Local Terminal

Steps S110, S120, S130, S170, S180, and S190 on the local terminal side respectively involve bidirectional data transmission and exchange with steps S210, S220, S260, S270, S280, and S290 on the cloud server side.

Specifically, timed synchronous interactions exist between steps S160 and S260 to periodically synchronize GI images between the local terminal and cloud server. This prevents display discrepancies on both sides resulting from the transmission of the filtered GI images from the cloud server to the local terminal.

In some embodiments, a hardware monitoring module running on the cloud server can determine a running status of the hardware of the cloud server (including the virtualized hardware of the VM), such as network transmission quality, processor load, and memory utilization. For example, it is determined that the network transmission speed drops below a threshold or the network latency exceeds a threshold, the compression rate of images transmitted from the cloud server to the local terminal can be increased, or the image quality can be reduced.

### 3.2.5 Other Methods Involving Graphics Interface Image Transmission

In other embodiments, methods involving GI image transmission can further include the following steps for implementation on either the local terminal or the cloud server.

In step S351, before the cloud server transmits GI images to the local terminal, the GI resolution is synchronized between the local terminal and the cloud server. Preferably, a data buffer between the cloud server and the local terminal is configured for transmitting at least a portion of the GI image data; based on historical transmission data, the data buffer is supplemented with generated data to form a continuous sequence of at least a portion of the GI image data, enabling applications reading data from the buffer to continuously retrieve GI image data.

In step S352, it is determined whether a network issue occurs (such as, the network transmission speed drops below a threshold or the network latency exceeds a threshold) or whether a high-speed image interaction mode is activated. If so, the method proceeds to step S353.

In step S353, it is determined whether a GI resolution adjustment command is received. If yes, the method proceeds to step S354; otherwise, it proceeds to step S355.

In step S354, the GI display resolution is reduced.

In step S355, the resolution of the transmitted GI image is reduced.

### 4. Data Transmission

In addition to dedicated channels for GI images and operation data, the data transmission mechanism of the cloud OS according to the invention can also handle user files, local application data, call data, and the like, as will be detailed in subsequent embodiments.

### 4.1 Basic Transmission Method

The application layer communication protocol framework for direct transmission between the local terminal and cloud server can include, but is not limited to, HTTP, Socket, WebTransport. Preferably, a communication protocol such as WebSocket or HTTP 3.0 is utilized between the local terminal and the cloud server. The transmission channel between the local terminal and cloud server can reuse the HTTP protocol's handshake channel. In addition, multiplexing is carried out extensively; for example, the image interaction program shown in FIG. 4 can transmit image data via a channel based on the WebSocket protocol. In an embodiment of image transmission based on the WebSocket protocol, a socket operates as the main thread in the VM to process image-source upload requests and to manage a WebSocket session. Upon receiving an image upload request, the main thread of the socket automatically creates a WebSocket service to transmit image data. Upon receiving an image browsing request, the WebSocket sub-service begins transmitting image data to the cloud operation desktop in the local terminal.

In a preferred embodiment, a data transmission method for the cloud OS according to the invention can include the following steps of: transmitting user operation data from the local terminal to the remote computing device via an operation data direct channel having a first level transmission priority; transmitting a GI image from the remote computing device to the local terminal via an image data direct channel based on a persistent connection network communication protocol, wherein the image data direct channel has a second level transmission priority; and providing a subscription protocol transmission channel having a third transmission priority, wherein the first level transmission priority is higher than the second or the third level transmission priority.

### 4.2 Subscription-Based Data Transmission Method

Referring to FIGS. 9 to 11, in some embodiments, a subscription-based communication protocol (such as MQTT) is employed between the local terminal and the cloud server. By means of the subscription-based communication, the data exchange is simplified and rapid among the local terminals and the cloud server, among VMs in the cloud server, and even between the browsers. The subscription-based communication also enables the server to proactively push data to the client terminal. Additionally, subscription-based communication enables real-time, reliable-messaging services for connecting remote computing devices with minimal codes, limited network bandwidth, and supporting asynchronous communication In the embodiments, both the local terminal and the remote computing device (such as, a cloud server, a VM, or a container) each is provided with one or more client units, while the remote computing device is provided with a proxy unit running persistently in the background. Through the subscription protocol transmission channel, the client unit provided in the local terminal or remote computing device can publish at least one data message packet via the proxy unit. This allows one or more other client units provided in the local terminal or remote computing device that have subscribed to the data message packet to pull the corresponding data message packet, thereby ensuring that all of the data message packets are consumed. It should be understood that, in the above embodiments, the proxy unit can be provided and run in a VM in the cloud server, or more specifically, in the underlying cloud computing OS of the cloud server, serving as a background service program for the cloud server. Specifically, with reference to FIG. 9, a central proxy service center is provided and deployed in the cloud server for managing a plurality of proxy units uniformly.

Continuing with reference to FIG. 9, in some embodiments, the local terminal includes a first local client unit provided in the cloud operation desktop and a second local client unit provided outside the cloud operation desktop. The VM includes a proxy unit, as well as a first remote client unit provided inside a browser framework and a second remote client unit provided outside the browser framework.

The first or second local client unit can publish a first data message packet via a proxy unit to allow the first or second remote client unit to pull the first data message packet. Consequently, the data from a browser or a local APP in the local terminal can be retrieved by another browser or a different program running in the VM (via the consumption of the data message packet).

Similarly, the first or second remote client unit can publish a second data message packet via a proxy unit to allow the first or second local client unit to pull the second data message packet. Consequently, the browser data (including UAPP runtime data) from the VM or data from a program running in the VM can be retrieved by another browser or a different program running in the local terminal (via the consumption of the data message packet).

Additionally, the second local client unit can directly acquire local data, which includes any one or more of local storage data, local application data, local hardware data, and local user characteristic data. The first local client unit can also directly communicate with the second local client unit to acquire the local data, and to generate a first data message packet from at least a portion of the acquired data. The first data message packet can be utilized by a subroutine running within the local browser framework or published to the proxy unit for retrieval or consumption by the remote client unit(s).

For example, with reference to FIG. 10, in an embodiment, the second local client unit is integrated into a part of the background service of the local terminal, so that a local foundational program can be invoked to retrieve the local data (such as photo data, text message data, call log data, or decoded data, etc.) and to generate a data message packet to be published to the proxy unit for pulling or consuming by the remote client unit(s). Referring to FIG. 10, in another embodiment, local data regarding control and operational status (such as, network status, battery level, CPU utilization, etc.) acquired by the local terminal background service through invoking a local system program can be transmitted to the first local client unit for generating a data message packet to be published to the proxy unit for pulling or consuming by the remote client unit(s). The distinction of this embodiment lies in executing, based on local data, various method processes (such as those described in Sections 3.2.1 and 3.2.3 above) by a subroutine running within the local browser framework (or cloud operation desktop).

Referring to FIG. 11, in an embodiment, a location request (accompanied by a request ID) sent by a map APP running in a remote browser framework is captured by a local interface unit associated with the location application service layer of the cloud OS to trigger the local client unit to publish a location data message packet. Subsequently, the location data acquired by a local location program or process within a local terminal background service (such as a Location Manager) is transmitted to the first local client unit, where a data message packet is generated to be published to the proxy unit. Since the remote client unit pre-subscribes to a location data messages from the proxy unit corresponding to the request ID, if the proxy unit holds such message, the location data can be retrieved via the consumption of the message in the proxy unit. The location data acquired by the first local client unit can be utilized by a subroutine running within the local browser framework to generate location markers on the locally received map GI under a specific condition. For example, during in-vehicle navigation using a map APP, if the network connection between the local terminal and the cloud server is limited or disconnected, the subroutine running within the local browser framework can utilize cached GI images to continue displaying the navigation map GI. Simultaneously, the current location data of the local terminal is utilized to display a location marker on the GI, thereby sustaining the navigation experience for a period of time. Due to the asynchronous communication using a subscription protocol, when network connection between the local terminal and the cloud server is recovered, the local client unit resumes sending location data accumulated during the off-line period to the proxy unit, so that all location data messages from the entire navigation period are able to be push to the remote client unit, thereby allowing the map APP to retrieve complete location data.

Furthermore, in some embodiments, the subscription-based data transmission method can further include the following steps of: allowing the first or second remote client unit of the VM associated with the logged-in user account to acquire remote data, wherein the remote data includes VM storage data, VM hardware data, or data associated with the user account from the user database in the cloud server; and generating a second data message packet from at least a portion of the acquired remote data. Consequently, the UAPP running in the VM can access the user databases outside the VM or acquire the hardware data of the VM across different programs or browser frameworks.

Additionally, in some embodiments, the subscription-based data transmission method can further include the following steps of: maintaining a communication connection between the proxy unit of each VM associated with the user account and the central proxy service center of the cloud server; exchanging at least one data transmission packet among the proxy units of multiple VMs, wherein the data transmission packet includes UAPP data and at least one data message packet; and determining that all the data message packets in the proxy unit are fully consumed by the client units of the multiple VMs associated with the user account. Consequently, in the environment of the cloud OS according to the present invention, data transmission, synchronization, migration, and other operation between multiple virtual machines can be achieved.

### 4.3 Data Buffering Method

The application service module of the cloud OS of the present invention often requires interfacing with the local terminal and the remote computing device via Internet, or invoking a service and a resource from a third-party server, therefore optimized data buffering methods are provided at both sides of the network transmission.

Referring to FIG. 12, in some embodiments, a web page file cache area is configured within the browser framework of the VM to cache a page file retrieved by the UAPP from a third-party server (such as a web server); meanwhile, a GI image cache area is configured within the browser framework of the local terminal to cache a GI image of the UAPP. It should be understood that relatively larger and more fragmented page data (which can also contain user confidential information) is cached only in the cloud service/VM, while the local terminal only caches image data, thereby avoiding storage pressure on the local terminal, facilitating cache cleanup, and enhancing security by completely eliminating the possibility of user data leakage from the local caches.

In other embodiments, the data buffering method of the present invention substantially includes the following steps of: establishing a data buffer among programs (such as local and cloud programs) associated with data transmission in the local terminal and the VM of the cloud server; and generating a continuous data stream within the data buffer based on previously received data to allow each of the programs to read the data from the buffer continuously. The data buffer can include, but is not limited to, GI image data buffering, multimedia data buffering, and location data buffering.

In an embodiment, the data transmitted from the local program to the cloud program is first temporarily stored in the local terminal's data buffer before being transmitted to the cloud server's buffer for subsequent reading by the cloud program. Timestamps (denoted as t_n to t_n+4) can be assigned to the data packets (denoted as d_n to d_n+4) respectively in both the local and cloud server buffers. If network interruption causes data that should be transmitted to the cloud server buffer at a specific time point (such as, t_n+3) to be interrupted or lost, supplementary data (d_n+2') corresponding to the time point (t_n+3) is written into the data buffer. The supplemental data (d_n+2') can be the same as the previous data (d_n+2) corresponding to the previous time point (such as, t_n+2) or be prediction data based on the linear interpolation of the data corresponding to most recent multiple time points. Once the local program resumes data synchronization with the buffer of the cloud server, the regular data (d_n+4) can be written to the buffer of the cloud server under a new timestamp (such as, t_n+4). Therefore, data continuity is maintained within the buffer, enabling the cloud program to read data continuously.

For example, a location APP is taken as a local program in the local terminal, while the UAPP in the VM can be a map APP. Based on the location data transmitted to the cloud-based map APP from the location APP, the geographic location of the local terminal is accurately determined in the map APP. In accordance with implementing the data buffering method described in the embodiment, the map APP in the VM can continuously receive location data, thereby avoiding map positioning drift at least during periods when the local terminal disconnects from the cloud service. Similarly, when the cloud program transmits data to the local program, continuous data can be generated in the buffer of the local terminal to prevent inconsistency of received data in the local program.

### 4.4 Data Redirection Method

In some embodiments, a data redirection method for the cloud OS generally includes the following steps of: establishing communication between a local terminal and a remote computing device, acquiring a first communication interface address for connecting the local terminal, and sending an identifier of the local terminal to the remote computing device; establishing communication between the remote computing device and a third-party server with the local terminal identifier, and acquiring a second communication interface address for connecting the third-party server; disconnecting the remote computing device from the third-party server, and modifying the first and second communication interface addresses to be the same, thereby redirecting at least a portion of the data transmission between the remote computing device and the third-party server to become the data transmission between the local terminal and the third-party server.

In some embodiments, multimedia data (such as, video and/or audio data) can be intercepted from data transmitted from the third-party server to the remote computing device, thereby redirecting multimedia data transmission between the remote computing device and the third-party server to stream data transmission between the local terminal and the third-party server. For example, with reference to FIG. 13, in one instance, a UAPP such as a news APP calls a service from a portal web server and retrieves a data file including news content data, webpage layouts, multimedia stream playing addresses, and the like. When a user remotely browses to the video page of the news application, the multimedia capture unit acquires the video stream playing address from the third-party server via the video page. Simultaneously, the playing address of the video control in the local terminal is redirected to the video stream playing address from the third-party server. The local video control is then arranged and overlaid to the local GI according to the dimensions and position of the video window on the video page of the news APP. Preferably, if the UAPP running on the cloud server performs full-screen video playing, the video stream is transmitted directly to the local terminal for full-screen playing, and the transmission of GI images to the local terminal is paused.

In other embodiments, when a first and a second local terminals serve as the operating terminals for at least one user of a first and a second remote computing devices, respectively, the data redirection method for the cloud OS can include the following steps of: determining an event where the first local terminal initiates a direct communication connection to the second local terminal based on the communication connection established between the first remote computing device and the second remote computing device; acquiring a first communication interface address for connecting the first local terminal, from the data connection between the first local terminal and the first remote computing device; acquiring a second communication interface address for connecting the second local terminal, from the data connection between the second local terminal and the second remote computing device; modifying the first and second communication interface addresses to be the same, thereby redirecting at least a portion of the data transmission between the first remote computing device and the second remote computing device to become data transmission between the first local terminal and the second local terminal. Preferably, at least a portion of the data includes real-time call data, thereby enabling a direct voice call between the first local terminal and the second local terminal (provided that the first and second terminals have voice-call function) without requiring forwarding through the remote computing device.

### 5. User Database and Central Proxy Service Center

The user database features a backup synchronization mechanism and high security levels, allocating data storage space corresponding to each user account. The stored data in the user database corresponding to each user account can include a user terminal list, a UAPP list, UAPP data, a personal file, a user operation history record, and a user key.

Based on the user database in the cloud server, system scheduling can be provided among a plurality of VMs via the central proxy service center to allocate corresponding cloud OS data and at least one VM for a user account associated with a local terminal.

In some embodiments, the proxy service method for the cloud OS can include the following steps of: retrieving cloud OS data and APP storage data from a user database in the cloud server, based on a user account associated with the local terminal of the user; correspondingly allocating at least one VM having the cloud OS data and the APP storage data for the user account; providing system scheduling among a plurality of VMs; providing each VM with a proxy unit for communication between the local terminal and the VM; and exchanging data transmission packets among the proxy units of a plurality of VMs (as shown in FIG. 9). The system scheduling among a plurality of VMs includes: system migration, computer resource scheduling, cross-VM program scheduling execution, or user data synchronous storage.

### 6. User Application (UAPP)

First, the operating mode or method of the UAPP is described. Referring to FIG. 13, a UAPP exemplified by a news APP typically includes GI layout codes and program functionality codes. When the UAPP runs within a web browser framework, the GI layout codes are executed to generate a GI layout via a rendering engine, while the browser framework's control interface unit transmits local terminal control commands to operate the UAPP. The program functionality codes are executed to call a native API and a Web API to retrieve user characteristic data, user preference data, and user requests from the local terminal. The data and requests are then transmitted to a web server of a news portal for acquiring news content, media streams, and other data associated with the user account, so that the acquired content can be subsequently presented on the GI of the news APP as customized news for the user. A transmission channel is established between the local client unit and the remote client unit to transmit a user file (such as, a locally captured photo file) from the local terminal to the UAPP. Referring to the browser framework implementation described in Section 2 above, the UAPP is preferably written in JS scripting, so that it supports development approaches for both Native APP and, in particular, Web APP, allowing cross-platform (such as, Windows, Linux/Android, Mac/iOS) compatibility with unified code development using the Electron framework (namely, a cross-platform desktop GUI application development framework based on web front-end technologies), thereby streamlining the development of the UAPP. The UAPP solution based on the cloud OS of the present invention is described below with reference to some embodiments.

### 6.1 Generation Method

Referring to FIGS. 14 to 16, a method for generating a UAPP to run in the cloud OS includes the following steps of: providing an APP store client in the remote computing device via an application service module, wherein the APP store client connects to an APP store server to acquire an icon and an installation link of the new UAPP; receiving a UAPP adding request triggered by a user operation on a local terminal, and acquiring the icon and installation link through the APP store server; retrieving UAPP storage data associated with the user account from a user database; and loading the UAPP into the remote computing device by the application service module using the installation link, and importing the storage data to the newly generated UAPP. The application store service can be deployed on a cloud server or another server provided by another service provider.

The method for generating a UAPP to run on a cloud OS further includes the following steps of: providing the runtime environment for the new UAPP through the application service module by the browser framework of the remote computing device, interfacing with a local hardware resource and a GI image, and accessing the user database; transmitting the GI image of the new UAPP to the cloud operation desktop running within the local browser framework in the local terminal; and allocating the local resource to the new UAPP based on a user-configured permission request table. The permission request table will be described in detail in the following embodiments.

### 6.2 Publication and Installation

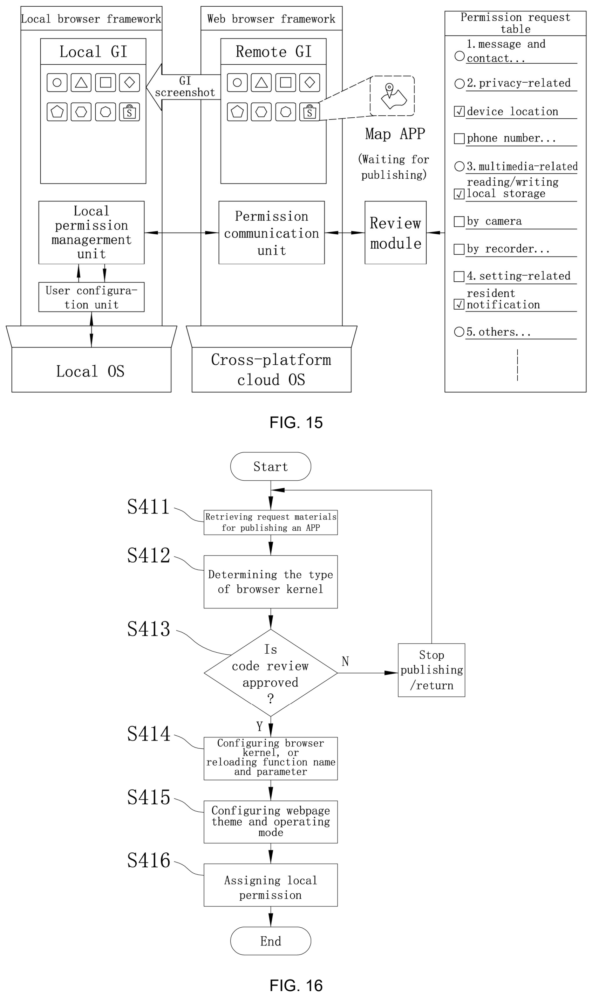

Referring to FIGS. 14 to 16, and incorporating steps S411-S416 in FIG. 16, a method for publishing a UAPP includes the following steps of: S411. retrieving request materials for publishing the UAPP, which include an icon file, a web address, a permission request table, the required browser kernel type, and source codes; S412. determining the browser kernel type; and S413. verifying that the request materials comply with application review rules, packaging the icon files, web addresses, and source codes for upload to the APP store server, and assigning an installation link. If the review fails, the publishing process is rejected.

Referring to FIG. 14, in some embodiments, the request materials can additionally include: various application keys serving as credentials to enable program functions or access a web server; types of web page style and operation habit, such as GI styles and gesture habits in Android or iOS; required add-on types for the browser framework; and copyright information certification materials. Referring to FIG. 15, in some embodiments, to ensure the functional implementation and secure, stable operation of the UAPP, the permission request table records relevant permissions need to be requested or utilized from the cloud OS, such as permissions for acquiring SMS and contact information, device location data, user phone numbers, reading/writing local storage, notifications, etc. Subsequently, during installation of the UAPP, after the user confirms authorization for permission(s), a target permission table is generated (such as in step S416).

In a preferred embodiment (such as in step S414), if the required browser type does not match the kernel type of the browser framework provided by the local terminal or remote computing device, the kernel of the browser framework provided by the remote computing device is switched to match the required browser type, or reloads functions in the original codes of the UAPP to ensure the installed UAPP matches the kernel of the browser framework. The theme and operating mode of the UAPP are configured (such as in step S415), so that when the UAPP runs, the web page provided by the browser framework is transferred to the page theme and operating mode corresponding to the desired browser type of the UAPP.

The UAPP publishing review can include the following processes: (1) Content Review - the APP store server reviews application content to ensure compliance with the requirements. For example, the APP store server prohibits an application containing content that violates a local regulation. Therefore, in the review process the content keyword of the application is particularly examined to ensure it poses no harm to the user. (2) Functionality Review - the APP store server reviews the application's functionality to ensure compliance with the requirements of the APP store server. For example, the APP store server requires that the application contains no malicious codes, viruses, trojans, or similar content. In the review process, the application's functionality is particularly examined to ensure it does not cause any harm to the user device. (3) User Experience Review - the APP store server reviews the user experience of the application to ensure compliance with the requirements of the APP store server. For example, the APP store server requires the application's GI design to be simple, clear, and easy to use, and the functionality must also be user-friendly. In the review process, the application's user experience is particularly examined to ensure compliance with the requirements of the APP store server. (4) Copyright Review - the APP store server reviews the copyright of the application to ensure compliance with the requirements of the APP store server. For example, the APP store server requires that the application does not infringe upon any third-party intellectual property rights. In the review process, copyrighted materials of the application is particularly examined to ensure compliance with the requirements of the APP store server. (5) Security Review - the APP store server reviews the security of the application to ensure compliance with the requirements of the APP store server. For example, the APP store server requires testing and verification of a network communication protocol and a third-party server used by the application to ensure user privacy security.

### 6.3 Application Content Integration

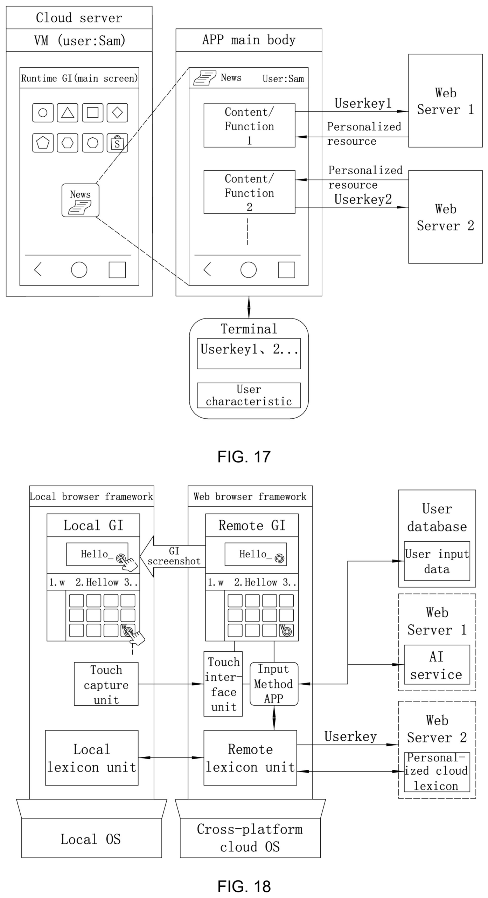

In some embodiments, at least one userkey can be used to retrieve resources and functions from a web server for integration into the same UAPP. For example, as shown in FIG. 17, the user's local terminal stores personal identification information (such as, fingerprints, facial data, personal security passwords, mobile verification codes, cloud server user accounts, etc.), which requires a high level of security and confidentiality. Therefore, it is necessary to convert or additionally extract userkeys associated with the personal identification information (such as, a secondary user account password, a service request key, etc.). Since the user has already registered an account with one or more service providers and acquired a userkey, the registered userkey can be acquired through user authorization via the local terminal. The registered userkey is then proxied to the web server of the service provider to retrieve the user's personalized resources and integrate them into the same UAPP for presentation. Therefore, the userkey-based approach provides significant flexibility and richness for the development and ecosystem of the UAPP in the cloud OS of the present invention.

### 6.4 Cloud Input Method

Referring to FIG. 18, in some embodiments, an input method for the cloud OS can include the following steps of: acquiring a user input operation on a local terminal, the user input operation including a user voice operation or a touch operation on the local GI; converting the user input operation into voice recognition phrases or a command for an runtime GI in a remote computing device; activating an input panel based on the speech recognition phrases or the operation command, and generating first language data; and retrieving second language data associated with the first language data from a remote lexicon to present the first language data and/or second language data on the runtime GI, wherein the remote lexicon receives local input data from the local lexicon of the local terminal, and the remote lexicon is synchronized with user input data stored in the user database. The remote lexicon receives personalized data in a cloud lexicon associated with the user account from a third-party web server.

Preferably, the cloud input method for cloud operating systems can further include the following steps of: invoking an Al (Artificial Intelligence) function via an application interface of an Al server to convert the first language data into third language data for presenting on the remote computing device, wherein the Al server deploys a pre-trained large language model (such as, GPT, BERT, BLOOM, XLNet, ERNIE Bot, etc.).

### 6.5 Opening another APP within an APP

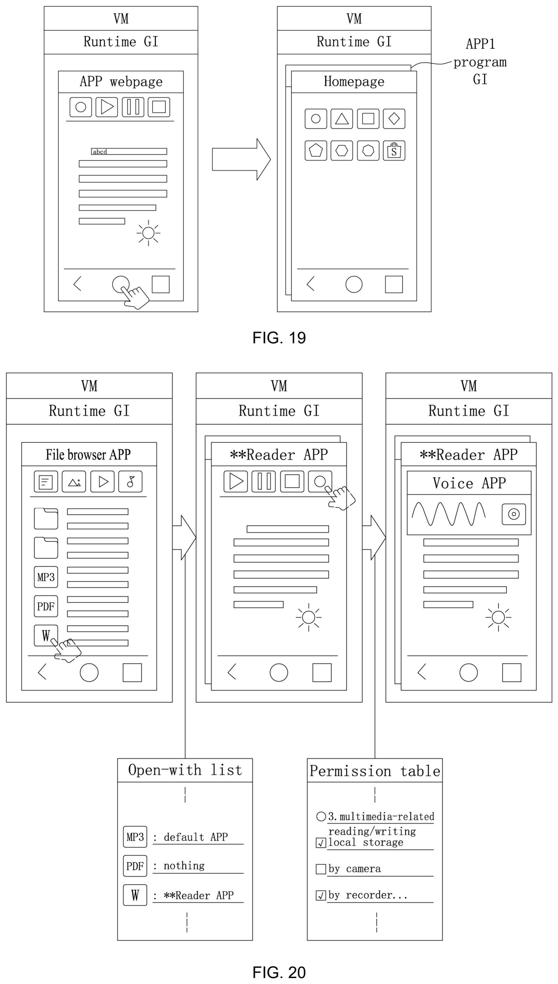

Referring to FIG. 19, in some embodiments, an opening method of a UAPP for a cloud OS can include the following steps of: capturing a user input operation on a local terminal, the user input operation including a user voice operation or a touch operation on the local GI; determining an operation object of the user input operation within the current runtime GI of a first UAPP, in a remote computing device; determining that the operation object is associated with a second UAPP; generating a runtime GI of the second UAPP upon capturing a message permitting the launch of the second UAPP, allowing the runtime GI to overlay at least a portion of the GI of the first UAPP, and allowing the first UAPP to continue running.

Referring to FIG. 20, the method for opening a UAPP for the cloud OS further includes the following steps of: preconfiguring an association list between the operation object and the UAPP to determine which UAPP opens each operation object, wherein the operation object includes a file type, a hardware resource, or a website address; or generating the message permitting the UAPP to launch after confirming that the permissions required by the UAPP to be opened match a permission type assigned to the local terminal. Specifically, the association list between the operation object and the UAPP can be an open-with list, where, for example, the default application configured for opening an MP3 file is a local media player. By means of the list, when clicking a file not configured to being open by an application, a prompt window is popped up asking the user whether to download an application capable of opening the file from the APP store. Specifically, if an OS permission is required for a UAPP or a link to be opened, the target permission table for the UAPP is invoked, or the user is prompted to consent to authorizing the permissions required for the opening event. Only after the permission is determined to be granted, the opening operation is permitted.

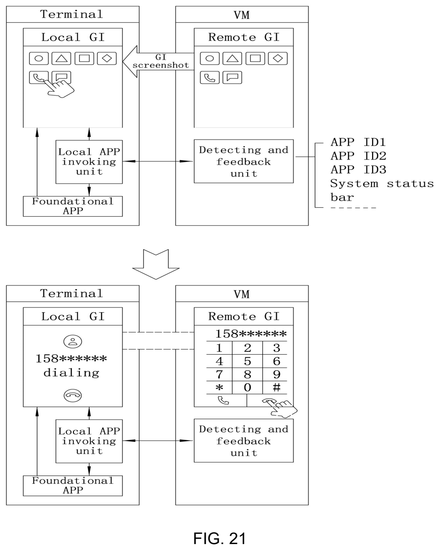

Referring to FIG. 21, in some embodiments, when determining that the operation object is associated with a third UAPP or a system bar on a remote computing device, a UAPP or a process having the same type as the third UAPP or the system bar is invoked in the local terminal. The third UAPP includes a camera APP, a phone APP, a messaging APP, a contact APP, or other foundational APP based on local functionality. The system bar includes a status bar or a hardware control center bar in the remote computing device. For example, the runtime GI of the VM in the cloud server is provided with a plurality of third-party UAPP icons and operation GIs, wherein the APP ID corresponding to each third-party UAPP is associated with a foundational APP or process having local function (such as, photographing, contacting, messaging, and locating). When detecting a user performing a gesture on a third-party UAPP icon (such as, tapping the phone icon), an operation GI (such as, a dial pad) pops up. A user command (such as, dialing a certain phone number) is then captured via the GI and relayed back to the local terminal to trigger the corresponding local application or process (such as, the local phone dialer program). In an embodiment, the user command can be executed by a JS program within a local browser framework, utilizing a backend runtime (such as, JS runtime) module to trigger the local foundational APP or process. Therefore, it can meet the switching requirements of the cloud-based UAPP and the application that require local hardware.

### 7. Others

The architectures, frameworks, modules, components, units, controls, add-ons, method steps, and other features described in the above embodiments of the present invention may be implemented in digital electronic circuitry or in computer hardware, firmware, software, or in combinations of them. The features may be implemented in a computer program product tangibly embodied in an information carrier, e.g., in a machine-readable storage device, for execution by a programmable processor; and method steps may be performed by a programmable processor executing a program of instructions to perform functions of the described implementations by operating on input data and generating output.

The described features can be advantageously implemented in one or more computer programs executable on a programmable system, which programmable system includes at least one input device, at least one output device, and at least one programmable processor coupled to receive data and instructions from a data storage system and to transmit data and instructions to the data storage system. A computer program is a set of instructions that may be used, directly or indirectly, in a computer to perform a certain activity or bring about a certain result. A computer program may be written in any form of programming language (e.g., C++, Java), including compiled or interpreted languages, and it may be deployed in any form, including as a stand-alone program or as a module, component, subroutine, or other unit suitable for use in a computing environment. For this purpose, the computer program may be performed on a programmable application-specific integrated circuit (ASIC).

Suitable processors for the execution of a program of instructions include, by way of example, both general and special purpose microprocessors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer may communicate with mass storage devices for storing data files. These mass storage devices may include magnetic disks, such as internal hard disks and removable disks; magneto-optical disks; and optical disks. The processor and the memory may be supplemented by, or incorporated in, ASIC.

While various aspects of implementations are described above, it should be apparent that the various features of implementations described above may be embodied in a wide variety of forms and that any specific structure and/or function described above is merely illustrative. Based on the present disclosure one skilled in the art should appreciate that an aspect described herein may be implemented independently of any other aspects and that two or more of these aspects may be combined in various ways. For example, an apparatus may be implemented and/or a method may be practiced using any number of the aspects set forth herein. In addition, such an apparatus may be implemented and/or such a method may be practiced using other structure and/or functionality in addition to or other than one or more of the aspects set forth herein. It will also be understood that, although the terms "first," "second," etc. may be used herein to describe various elements, these elements should not be limited by these terms. These terms are only used to distinguish one element from another. For example, a first node could be termed a second node. The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. As used herein, the term "if" may be construed to mean "when" or "upon" or "in response to determining" or "in accordance with a determination" or "in response to detecting," that a stated condition precedent is true, depending on the context.

## Claims

1. A cloud operating system, configured in a remote computing device that is connected to a local terminal via a network, the local terminal serving as both a user operation terminal and a user application graphics interface receiving terminal, the cloud operating system comprising:
a base kernel for invoking physical and/or virtualized hardware resources of the remote computing device in response to a request;
a runtime library for providing a runtime environment for at least one operating system platform based on the base kernel;
an interface service module for providing at least one application programming interface corresponding to the runtime library; and
an application service module for providing application interfaces and service integration to the local terminal.

2. **The** cloud operating system according to claim 1, wherein the application service module comprises:
a device monitoring unit for acquiring hardware parameters and real-time operating status data from the local terminal;
a graphics interface generation unit for generating a runtime graphics interface of a user application based on the hardware parameters of the local terminal;
a cloud operation interface unit for maintaining operating interaction with the local terminal; and
a driver interface unit for redirecting a required hardware driver request of an application in the remote computing device to a hardware driver request of the local terminal.

3. The cloud operating system according to claim 1 or 2, wherein the local terminal comprises a display screen, network communication hardware, and a local operating system, and the remote computing device comprises at least one selected from the group consisting of a cloud server, a virtual machine, a container, and a personal computer, and wherein at least a part of the cloud operating system is deployed on a remote server, a virtual machine, or a container.

4. The cloud operating system according to any one of claims 1 to 3, wherein the local terminal comprises a cloud operation desktop running within a browser framework in the local operating system of the local terminal, the cloud operation desktop comprising:
a graphics interface control or add-ons providing a user graphics interface and a functional extension associated with the user graphics interface based on the browser framework;
a local access unit connected to the graphics interface control or add-on, wherein the local access unit is configured to capture real-time user action data and to access local application information and hardware information in the local terminal;
at least one service unit connected to the graphics interface control or add-on, for providing interactions of graphics interface images, videos, and audio between the local terminal and the remote system; and
at least one client unit connected to both the service unit and the local access unit, for communicating and transmitting data with proxy service programs in the remote computing device.

5. The cloud operating system according to any one of claims 2 to 4, wherein at least one user application and at least one background service program are executed in a remote environment based on the application service module, wherein
the device monitoring unit is configured to acquire hardware data of a screen and an input device provided in the local terminal after an authenticated connection between the local terminal and the remote computing device, and to receive data from a local application in the local terminal, wherein
the graphics interface generation unit generates a graphics interface environment for presenting the user application, based on a graphics interface style and a default operational habit corresponding to a user account, and based on a configuration parameter in the hardware data acquired by the device monitoring unit, wherein the background service program captures a runtime graphics interface of the user application for generating a graphics interface image and transmitting the graphics interface image to the cloud operation desktop in the local terminal, wherein
the cloud operation interface unit is invoked by the background service program to receive user action data in real-time from the local terminal, and convert the data into operation data for the remote computing device, and wherein
the driver interface unit redirects source data intended for hardware execution from the remote computing device to the hardware of the local terminal, in response to a hardware resource request from the user application.

6. The cloud operating system according to any one of claims 2 to 5, wherein
at least a portion of the graphics interface generation unit is provided by a graphics interface rendering engine of a browser framework of the remote computing device to generate the runtime graphics interface of the user application from a web page file received by the user application from the web server.

7. The cloud operating system according to any one of claims 2 to 6, wherein
in response to a hardware resource request initiated by the user application via an application programming interface, the driver interface unit captures the source data from the memory area of the remote computing device and transmits the source data to the local terminal, wherein the hardware of the remote computing device acquires the source data upon being triggered by a remote driver program, and wherein
in response to a command from the driver interface unit, a background service unit of the local terminal initiates hardware resource interfacing via an application programming interface to receive the source data, and triggers the local hardware to apply the source data by a local driver program.

8. The cloud operating system according to any one of claims 1 to 7, wherein
the remote computing device comprises a cloud server and at least one virtual machine generated within the cloud server, wherein the runtime library, the interface service module, and the application service module of the cloud operating system are at least deployed in the virtual machine, and wherein
system scheduling is provided among a plurality of virtual machines via a central proxy service center to allocate corresponding cloud operating system data and at least one virtual machine for the user account associated with the local terminal, based on the user database in the cloud server.

9. The cloud operating system according to any one of claims 1 to 8, wherein the base kernel is a Linux kernel, and the runtime library comprises at least one selected from the group consisting of a Linux runtime component, an Android runtime component, a Windows runtime component, and an iOS runtime component.

10. The cloud operating system according to any one of claims 1 to 9, wherein the interface service module comprises an interpreter or engine for interpreting and executing procedure codes of the user application.

11. A method for generating a remote graphics interface, comprising:
establishing a network connection between a remote computing device and a local terminal, and serving the local terminal as an operation terminal of a user;
acquiring user account information and hardware configuration parameters from the local terminal, the hardware configuration parameters comprising at least one of a local operating system type, a screen size, a display resolution and an input device type;
retrieving a graphics interface style and operational habits corresponding to a user account or local operating system type from the user database in the remote computing device; generating a browser window within the browser framework of the remote computing device based on the acquired screen size or resolution of the local terminal; configuring a renderer to generate a graphics interface layout based on the graphics interface style; determining operational gestures for the browser window based on the operational habits, thereby establishing a graphics interface environment for a user application running within the browser framework; and
capturing a graphics interface image of the browser window and transmitting the graphics interface image to the local terminal for display.

12. The method according to claim 11, wherein
the renderer of the browser framework in the remote computing device is provided with HTML and CSS interpreters for processing a web page file and a script file that are received from a web server to generate a runtime graphics interface of a user application via a JavaScript engine, wherein
the runtime graphics interface is converted into a graphics interface image via an add-on running within the browser framework of the remote computing device, and wherein
the local terminal is provided with a browser framework to allow a browser control to receive and display the graphics interface image.

13. The method according to claim 11 or 12, comprising:
adjusting the graphics interface image to be transmitted from the remote computing device to the local terminal prior to transmission, based on at least one of a current network transmission status, an application scenario status, a user command, a control status, and a display resolution of the local terminal, wherein
at least a portion of the graphics interface image is dynamically generated, and wherein the adjusting comprises at least one of: slicing at least a portion of the graphics interface image, compressing at least a portion of the graphics interface image, and comparing at least a portion of the graphics interface image.

14. A method for transmitting graphics interface image for the cloud operating system according to any one of claims 1 to 10, the method comprising:
establishing an operation data interaction connection between the local terminal and the remote computing device, wherein a change to at least a portion of the graphics interface of the remote computing device is caused by the operation data transmitted from the local terminal;
transmitting graphics interface images from the remote computing device to the local terminal for at least a time period;
dynamically adjusting a graphics interface image to be transmitted from the remote computing device based on a transmission interval of the transmitted graphics interface images from the remote computing device to the local terminal, wherein the dynamically adjusting comprises:
determining, within a predetermined time period, the interval between image transmissions is less than an interval threshold, and performing, in a subsequent time period, at least one step of: reducing the number of the graphics interface images transmitted to the local terminal; and reducing the quality of the entire or a portion of the graphics interface image through image compression.

15. The method according to claim 14, wherein the step of dynamically adjusting the graphics interface image to be transmitted from the remote computing device comprises:
detecting, in real-time, the current transmission interval of the graphics interface images in the same graphics interface area from the remote computing device to the local terminal;
upon determining the current transmission interval to be less than a first time threshold, abandoning a graphics interface image to be transmitted in the current time of transmission; and
upon determining the current transmission interval to be less than a second time threshold, reducing the quality of the graphics interface image to be transmitted,
wherein the first time threshold is less than the second time threshold.

16. The method according to claim 14 or 15, wherein the step of dynamically adjusting the graphics interface image to be transmitted from the remote computing device comprises:
detecting the current transmission interval of the graphics interface images in the same graphics interface area from the remote computing device to the local terminal; and
upon determining the current transmission interval to be greater than a third time threshold, restoring the quality of the graphics interface image to be transmitted, or acquiring a higher quality graphics interface image from the cloud server for transmission to the local terminal.

17. The method according to claim 14, comprising:
receiving, by the local terminal, graphics interface images from the remote computing device; and
dynamically filtering at least one image of the graphics interface images from the remote computing device based on a real-time monitored operation interval of the local terminal, and displaying at least a portion of the filtered image on the local terminal.

18. The method according to claim 17, comprising:
determining, during at least a time period, that the operation interval of the local terminal is less than a fourth time threshold;
discarding at least one image of the graphics interface images received from the remote computing device for display on the local terminal; and
reducing the transmission frequency of operation data from the local terminal to the computing device.

19. The method according to claim 17, wherein the step of dynamically filtering at least one image of the graphics interface images from the remote computing device comprises:
determining, during at least a time period, that the operation interval of the local terminal is greater than a fifth time threshold, and retaining all received graphics interface images for display on the local terminal; and
determining, during at least a time period, that the operation interval of the local terminal is greater than a sixth time threshold, and intermittently selecting graphics interface images for display on the local terminal from the received graphics interface images until the next operation of the local terminal occurs,
wherein the sixth time threshold is greater than the fifth time threshold.

20. The method according to any one of claims 14 to 19, comprising:
determining, during at least a time period, that the operation interval of the local terminal is greater than a seventh time threshold, and reducing the display frame rate of the local terminal until the next operation occurs.

21. The method according to any one of claims 14 to 20, comprising:
determining that a movement amplitude among operating points on the local terminal exceeds a predetermined amplitude threshold;
retaining the graphics interface images associated with the operating points corresponding to the start and end actions of the gesture from the graphics interface images transmitted from the cloud server to the local terminal due to the operation data generated from the operating points, and reducing other graphics interface images for display on the local terminal; and
synchronizing graphics interface images between the local terminal and the remote computing device at regular intervals.

22. A remote browser operating on a cloud operating system, comprising:
a client unit for communicating between the remote browser application and other applications running on the cloud operating system, and for communicating with the local terminal to acquire data from the local terminal and the remote computing device; and
a graphics interface image acquisition unit for acquiring at least a portion of the graphics interface image from the user graphics interface of a web-based user application running within the remote browser,
wherein the client unit and the graphics interface image acquisition unit are respectively connected to an image interaction service program in the cloud operating system, and wherein the image interaction service program implements the method according to any one of claims 14 to 16.

23. A local browser operating on a local operating system, comprising:
a client unit for communicating between the local browser application and other applications running on the local operating system, and for communicating with the remote computing device to acquire data from the local terminal and the remote computing device;
a display component for displaying graphics interface images from the remote computing device; and
an image interaction service unit connected to the display component for implementing the method according to any one of claims 17 to 21.

24. A data transmission method for a cloud operating system deployed in a remote computing device, wherein via a network the remote computing device is associated with a local terminal serving as both a user operation terminal and a graphics interface display terminal for the cloud operating system, wherein the local terminal and the remote computing device each is provided with one or more client units, and the remote computing device is provided with a proxy unit running resident in the background,
wherein the method comprises the steps of:
publishing, by the client unit provided in the local terminal or remote computing device, one or more data message packets via the proxy unit through a subscription protocol transmission channel; allowing one or more other client units provided in the local terminal or remote computing device that subscribe to the data message packets in advance to pull the corresponding data message packets; and determining consumption of all the data message packets.

25. The method according to claim 24, comprising:
transmitting user operation data from the local terminal to the remote computing device via an operation data direct channel having a first level transmission priority; and
transmitting a graphics interface image from the remote computing device to the local terminal via an image data direct channel based on a persistent connection network communication protocol, wherein the image data direct channel has a second level transmission priority,
wherein the subscription protocol transmission channel having a third transmission priority, and wherein the first level transmission priority is higher than the second level transmission priority or the third level transmission priority.

26. The method according to claim 24 or 25, wherein
the remote computing device comprises a cloud server and at least one virtual machine generated within the cloud server, wherein system scheduling is provided among the at least one virtual machine via a central proxy service center to allocate corresponding cloud OS data and at least one virtual machine for a user account associated with the local terminal based on the user database in the cloud server, wherein
a process running within the browser framework in the allocated virtual machine provides a graphics interface environment for a user application and the process accesses to the user database, wherein the local terminal comprises a cloud operation desktop running within a local browser framework to receive the graphics interface image generated by the browser framework of the virtual machine, wherein
the local terminal comprises a first local client unit provided in the cloud operation desktop and a second local client unit provided outside the cloud operation desktop, wherein the virtual machine includes the proxy unit, and a first remote client unit provided inside a browser framework and a second remote client unit provided outside the browser framework, and wherein
the method comprises the steps of:
publishing, by the first local client unit or the second local client unit, a first data message packet via the proxy unit to allow the first remote client unit or the second remote client unit to pull the first data message packet; and
publishing, by the first remote client unit or the second remote client unit, a second data message packet via the proxy unit to allow the first local client unit or the second local client unit to pull the second data message packet.

27. The method according to claim 26, comprising:
directly acquiring, by the second local client unit, local data comprising at least one selected from the group consisting of local storage data, local application data, local hardware data, and local user characteristic data; and
directly communicating the first local client unit with the second local client unit to acquire the local data, and to generate the first data message packet from at least a portion of the acquired data.

28. The method according to claim 26 or 27, comprising:
allowing the first remote client unit or the second remote client unit in the virtual machine associated with a logged-in user account to acquire remote data, wherein the remote data comprises virtual machine storage data, virtual machine hardware data, or data associated with the logged-in user account from the user database in the cloud server; and
generating the second data message packet from at least a portion of the acquired remote data.

29. The method according to any one of claims 26 to 28, comprising:
maintaining a communication connection between the proxy unit of each virtual machine associated with the user account and a central proxy service center of the cloud server;
exchanging at least one data transmission packet among a plurality of the proxy units of a plurality of virtual machines, wherein the data transmission packet comprises user application data and at least one data message packet; and
determining that the data message packet in the proxy unit is fully consumed by the client unit in the plurality of virtual machines associated with the user account.

30. A data redirection method, based on the cloud operating system according to any one of claims 1 to 10, the method comprising:
establishing communication between the local terminal and the remote computing device, acquiring a first communication interface address for connecting the local terminal, and sending an identifier of the local terminal to the remote computing device;
establishing communication between the remote computing device and a third-party server with the local terminal identifier, and acquiring a second communication interface address for connecting the third-party server; and
modifying the first communication interface address and second communication interface address to be the same, and redirecting at least a portion of the data transmission between the remote computing device and the third-party server to become the data transmission between the local terminal and the third-party server.

31. **The** method according to claim 30, comprising: intercepting multimedia data from the data transmitted from the third-party server to the remote computing device, and redirecting multimedia data transmission between the remote computing device and the third-party server to stream data transmission between the local terminal and the third-party server.

32. A data redirection method, based on the cloud operating system according to any one of claims 1 to 10, wherein a first local terminal serves as an operation terminal associated with a first remote computing device for at least one user, and a second local terminal serve as an operation terminal associated with a second remote computing device for the at least one user, the method comprising:
determining an event where the first local terminal initiates a direct communication connection to the second local terminal based on the communication connection established between the first remote computing device and the second remote computing device;
acquiring a first communication interface address for connecting the first local terminal, from the data connection between the first local terminal and the first remote computing device; acquiring a second communication interface address for connecting the second local terminal, from the data connection between the second local terminal and the second remote computing device; and
modifying the first and second communication interface addresses to be the same, and redirecting at least a portion of the data transmission between the first remote computing device and the second remote computing device to become data transmission between the first local terminal and the second local terminal.

33. **The** method according to claim 32, wherein the at least a portion of the data comprises real-time call data of the user.

34. A data buffering method for the cloud operating system according to any one of claims 1 to 10, comprising:
establishing at least one buffer among a plurality of nodes transmitting data over a network in the local terminal and the remote computing device; and
generating continuous data within the data buffer based on previously received data of the nodes to enable continuous data reading by the nodes reading data from the data buffer.

35. The method according to claim 34, wherein the data buffer comprises at least one selected from the group consisting of graphics interface image data buffering, multimedia data buffering, and location data buffering.

36. A proxy service method for the cloud operating system according to any one of claims 1 to 10, wherein the remote computing device comprises a cloud server and at least one virtual machine generated within the cloud server,
the proxy service method comprising:
retrieving cloud operating system data and application storage data from a user database in the cloud server, based on a user account associated with the local terminal of the user; correspondingly allocating at least one virtual machine having the cloud operating system data and the application storage data for the user account; providing system scheduling among a plurality of virtual machines; and
providing each virtual machine with a proxy unit for communication between the local terminal and the virtual machine, and exchanging data transmission packets among the proxy units of a plurality of the virtual machines.

37. The method according to claim 36, wherein the system scheduling among the plurality of virtual machines comprises: system migration, computer resource scheduling, cross-virtual machine program scheduling execution, or user data synchronous storage.

38. A method for generating a user application based on the cloud operating system according to any one of claims 1 to 10, comprising:
providing an application store client in the remote computing device via an application service module, wherein the application store client connects to an application store server to acquire an icon and an installation link of a user application;
receiving a user application adding request triggered by a user operation on a local terminal, and acquiring the icon and the installation link through the application store server; retrieving user application storage data associated with the user account from a user database; and
loading the user application into the remote computing device by the application service module with the installation link, and importing the storage data to the newly generated user application.

39. The method according to claim 38, comprising:
providing the runtime environment for the new user application through the application service module by the browser framework of the remote computing device, interfacing with a local hardware resource and a graphics interface image, and accessing the user database; and
transmitting the graphics interface image of the new user application to the cloud operation desktop running within the local browser framework in the local terminal, and allocating the local resource to the new user application based on a user-configured permission request table.

40. The method according to claim 38 or 39, comprising:
acquiring request materials for publishing the user application, the request materials comprising an icon file, a web address, a permission request table, the required browser kernel type, and source codes; and
determining that the request materials comply with application review rules, packaging the icon files, web addresses, and source codes for upload to the application store server, and assigning an installation link.

41. The method according to claim 40, wherein the request materials comprise a required browser type, the method comprising:
determining that the required browser type does not match the kernel type of the browser framework provided by the local terminal or remote computing device;
switching the kernel of the browser framework provided by the remote computing device to match the required browser type, or
reloading functions in the original codes of the user application to ensure the installed user application matches the kernel of the browser framework; and
transferring the web page provided by the browser framework to a page theme and an operating mode corresponding to the desired browser type of the user application, when running the user application.

42. An input method based on a cloud operating system, wherein the cloud operating system is configured in a remote computing device, the remote computing device is connected to a local terminal via a network to transmit graphics interface images to the local terminal, and the local terminal serves as a user operation terminal, the method comprising:
acquiring a user input operation on a local terminal, the user input operation comprising a user voice operation or a touch operation on a local graphics interface;
converting the user input operation into voice recognition phrases or a command for an runtime graphics interface in the remote computing device;
activating an input panel based on the speech recognition phrases or the operation command, and generating first language data; and
retrieving second language data associated with the first language data from a remote lexicon to present the first language data and/or second language data on the runtime graphics interface,
wherein the remote lexicon receives local input data from the local lexicon of the local terminal, and the remote lexicon is synchronized with user input data stored in the user database.

43. The method according to claim 42, wherein the remote lexicon receives personalized data in a cloud lexicon associated with the user account from a third-party web server.

44. The method according to claim 42 or 43, comprising:
invoking an Al function via an application interface of an Al server to convert the first language data into third language data for presenting on the remote computing device, wherein the Al server deploys a pre-trained large language model.

45. A method for opening a user application based on the cloud operating system according to any one of claims 1 to 10, comprising:
capturing a user input operation on a local terminal, the user input operation including a user voice operation or a touch operation on the local graphics interface;
determining an operation object of the user input operation within the current runtime graphics interface of a first user application, in the remote computing device; and
determining that the operation object is associated with a second user application, generating a runtime graphics interface of the second user application upon capturing a message permitting the launch of the second user application, allowing the runtime graphics interface to overlay at least a portion of the graphics interface of the first user application, and allowing the first user application to continue running.

46. The method according to claim 45, comprising:
preconfiguring an association list between the operation object and the user application to determine which user application opens each operation object, wherein the operation object comprises a file type, a hardware resource, or a website address; or
generating the message permitting the user application to launch after confirming that the permissions required by the user application to be opened match a permission type assigned to the local terminal.

47. The method according to claim 45 or 46, comprising:
determining that the operation object is associated with a third UAPP or a system bar on a remote computing device; and invoking, in the local terminal, a UAPP or a process having the same type as the third UAPP or the system bar, wherein the third UAPP comprises a camera APP, a phone APP, a messaging APP, a contact APP, or other foundational APP based on local functionality, and wherein the system bar comprises a status bar or a hardware control center bar of the remote computing device.

48. A computer-readable storage medium storing program instructions, which, when executed by a processor, cause the processor to implement the method according to any one of claims 4 to 16 and 24 to 47.

49. A mobile computing terminal, **characterized by** comprising:
a network communication module connected to a cloud server;
an image processor for processing graphics interface image data transmitted from the remote computing device;
a screen for displaying the graphics interface image data; and
the computer-readable storage medium according to claim 48.

50. A cloud computing server, **characterized by** comprising:
at least one remote computing device comprising one or more virtual machines;
a central proxy service center connected to the one or more virtual machines, for performing system scheduling among the virtual machines and allocating cloud operating system data; and
the computer-readable storage medium according to claim 48.
